(19) Europäisches Patentamt
European Patent Office
Office européen des brevets

(11) **EP 4 458 629 A1**

(12) **EUROPEAN PATENT APPLICATION**
published in accordance with Art. 153(4) EPC

(43) Date of publication:
06.11.2024 Bulletin 2024/45

(51) International Patent Classification (IPC):
**B60T 17/00** [(2006.01)]     **B60T 17/18** [(2006.01)]
**B01D 53/26** [(2006.01)]     **F04B 39/16** [(2006.01)]

(21) Application number: 22916026.2

(22) Date of filing: 26.12.2022

(52) Cooperative Patent Classification (CPC):
**B01D 53/26; B60T 17/00; B60T 17/18; F04B 39/16**

(86) International application number:
**PCT/JP2022/047940**

(87) International publication number:
**WO 2023/127803 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.12.2021 JP 2021212783

(71) Applicant: **Nabtesco Automotive Corporation
Tokyo 102-0093 (JP)**

(72) Inventor: **SUGIO Takuya
Tokyo 102-0093 (JP)**

(74) Representative: **Grünecker Patent- und
Rechtsanwälte
PartG mbB
Leopoldstraße 4
80802 München (DE)**

(54) **AIR SUPPLY SYSTEM, CONTROL METHOD FOR AIR SUPPLY SYSTEM, AND CONTROL PROGRAM FOR AIR SUPPLY SYSTEM**

(57)     An air supply system, a method of controlling an air supply system, and a control program for an air supply system are provided that improve accuracy of deterioration determination of a desiccant. An air supply system 10 includes an air drying circuit 11 and an ECU 80. The air drying circuit 11 includes a filter 17 provided between a compressor 4 for delivering compressed air and an air tank 30 for storing compressed dried air. The filter 17 includes a desiccant that traps water. The ECU 80 controls the air drying circuit 11. The ECU 80 includes a determining unit 80B. The determining unit 80B executes a supplying operation of causing the compressed air delivered by the compressor 4 to pass through the filter 17 to store compressed dried air in the air tank 30, executes a regeneration operation of causing the compressed dried air stored in the air tank 30 to pass through the filter 17 in an inverse direction, thereby draining the trapped water through a drain port 27, and determines whether the desiccant has deteriorated using temporal changes in a dew point of the compressed dried air in the supplying operation executed after the regeneration operation.

Fig.1

EP 4 458 629 A1

## Description

TECHNICAL FIELD

The present disclosure relates to an air supply system, a control method for an air supply system, and a control program for an air supply system.

BACKGROUND ART

Vehicles such as trucks, buses, and construction machines use compressed air delivered from a compressor to control pneumatic systems such as a brake system and a suspension system. The compressed air contains liquid impurities such as water, which is contained in the atmosphere, and oil for lubricating the interior of the compressor. When entering inside a pneumatic system, compressed air containing a large amount of water and oil may cause rust and cause swelling of rubber members, which can result in an operational defect. For this reason, a compressed-air drying device that removes impurities such as water and oil from the compressed air is arranged downstream relative to the compressor.

The compressed-air drying device includes a desiccant and various types of valves. The compressed-air drying device performs a loading operation (dehumidifying operation) that removes water and the like from compressed air. Compressed dried air generated by the dehumidifying operation is stored in a storing portion. The purification function of the compressed-air drying device is reduced in accordance with the amount of the compressed dried air that passes through. For this reason, the compressed-air drying device performs the unloading operation (regeneration operation), in which the compressed-air drying device removes oil and water adsorbed by the desiccant from the desiccant, releases the removed oil and water as collected liquid through a drain valve (refer to, for example, Patent Literature 1).

CITATION LIST

Patent Literature

Patent Literature 1: Japanese Laid-Open Patent Publication No. 2010-201323

SUMMARY OF INVENTION

Technical Problem

In the above-described compressed-air drying device, the deterioration state of the desiccant is determined based on the humidity at some point in time after regeneration. However, the manner in which the desiccant deteriorates varies depending on the temperature or the traveling environment of the vehicle. Thus, deterioration of the desiccant cannot be determined with sufficient accuracy is the determination is performed only at a certain point in time after regeneration. Therefore, there is a need to improve the accuracy of desiccant deterioration determination.

Solution to Problem

To achieve the foregoing objective, an air supply system includes an air drying circuit and a controller. The air drying circuit is arranged between a compressor configured to deliver compressed air and an air tank configured to store compressed dried air. The air drying circuit includes a filter including a desiccant that traps water. The controller is configured to control the air drying circuit. The controller is configured to execute a supplying operation of causing the compressed air delivered by the compressor to pass through the filter in a first direction to produce compressed dried air, and supplying this compressed dried air to the air tank to store the compressed dried air in the tank. The controller is also configured to execute a regeneration operation of causing the compressed dried air stored in the air tank to pass through the filter in a second direction that is opposite to the first direction, thereby draining the trapped water through a discharge port. The controller is further configured to execute a determining operation of determining whether the desiccant has deteriorated using temporal changes in a dew point of the compressed dried air in the supplying operation executed after the regeneration operation.

The inventor has found that there is a correlation between desiccant deterioration and temporal changes in the dew point of compressed dried air during the supplying operation executed after the regeneration operation. With the above-described configuration, the deterioration of the desiccant is determined by using temporal changes in the dew point of the compressed dried air in the supplying operation. The humidity change characteristic of the compressed dried air is directly affected by its temperature change. Therefore, the state of the compressed air can be comprehensively obtained through this single characteristic. This allows for determination of deterioration of the desiccant and improves the accuracy of desiccant deterioration determination.

In the above-described air supply system, the controller may be configured to calculate a feature based on the temporal changes in the dew point of the compressed dried air, and determine whether the desiccant has deteriorated based on the calculated feature.

In the above-described air supply system, the controller may be configured to accumulate an average value of the features and an average value of passed-through air amounts in all cycles from a cycle in which the regeneration operation was executed to a cycle in which the regeneration operation was not executed. T the controller may also be configured to use the average value of the accumulated features to determine whether the desiccant has deteriorated based on a ratio at which the data of the accumulated features exceeds a threshold.

In the above-described air supply system, the controller may be configured to delete data including a maximum value of the accumulated features and a passed-through air amount that corresponds to the maximum value when an obtained feature is less than any of the accumulated features.

In the above-described air supply system, the controller may be configured to delete data including a minimum value of the accumulated features and a passed-through air amount that corresponds to the minimum value when an obtained passed-through air amount is less than the average of the accumulated passed-through air amounts and there is an allowable margin relative to a limit of a dehumidification capacity of the desiccant.

The above-described air supply system may further include a notification unit that issues a notification that the desiccant has deteriorated. The controller may be configured to, after determining that the desiccant has deteriorated based on the features, continuously determine whether the desiccant has deteriorated, and, after determining that the desiccant has deteriorated, stop the notification issued by the notification unit when determining that the desiccant has not deteriorated.

To achieve the foregoing objective, a method of controlling an air supply system is provided. The air supply system includes an air drying circuit and a controller. The air drying circuit is arranged between a compressor configured to deliver compressed air and an air tank configured to store compressed dried air. The air drying circuit includes a filter including a desiccant that traps water. The controller is configured to control the air drying circuit. The method includes: a supplying step that executes a supplying operation of causing the compressed air delivered by the compressor to pass through the filter in a first direction to produce compressed dried air, and supplying this compressed dried air to the air tank to store the compressed dried air in the tank; a regeneration step that executes a regeneration operation of causing the compressed dried air stored in the air tank to pass through the filter in a second direction that is opposite to the first direction, thereby draining the trapped water through a discharge port; and a determining step that determines whether the desiccant has deteriorated using temporal changes in a dew point of the compressed dried air in the supplying operation executed after the regeneration operation.

The inventor has found that there is a correlation between desiccant deterioration and temporal changes in the dew point of compressed dried air during the supplying operation executed after the regeneration operation. With the above-described method, the deterioration of the desiccant is determined by using temporal changes in the dew point of the compressed dried air in the supplying operation. The humidity change characteristic of the compressed dried air is directly affected by its temperature change. Therefore, the state of the compressed air can be comprehensively obtained through this single characteristic. This allows for determination of deterioration of the desiccant and improves the accuracy of desiccant deterioration determination.

To achieve the foregoing objective, a control program for an air supply system is provided. The air supply system includes an air drying circuit and a controller. The air drying circuit is arranged between a compressor configured to deliver compressed air and an air tank configured to store compressed dried air. The air drying circuit includes a filter including a desiccant that traps water. The controller is configured to control the air drying circuit. The control program causes the controller to execute: a supplying step that executes a supplying operation of causing the compressed air delivered by the compressor to pass through the filter in a first direction to produce compressed dried air, and supplying this compressed dried air to the air tank to store the compressed dried air in the tank; a regeneration step that executes a regeneration operation of causing the compressed dried air stored in the air tank to pass through the filter in a second direction that is opposite to the first direction, thereby draining the trapped water through a discharge port; and a determining step that determines whether the desiccant has deteriorated using temporal changes in a dew point of the compressed dried air in the supplying operation executed after the regeneration operation.

The inventor has found that there is a correlation between desiccant deterioration and temporal changes in the dew point of compressed dried air during the supplying operation executed after the regeneration operation. With the above-described program, the deterioration of the desiccant is determined by using temporal changes in the dew point of the compressed dried air in the supplying operation. The humidity change characteristic of the compressed dried air is directly affected by its temperature change. Therefore, the state of the compressed air can be comprehensively obtained through this single characteristic. This allows for determination of deterioration of the desiccant and improves the accuracy of desiccant deterioration determination. Advantageous Effects of Invention

The present disclosure improves the accuracy of the deterioration determination of the desiccant.

BRIEF DESCRIPTION OF DRAWINGS

Fig. 1 is a block diagram showing the configuration of an air supply system according to an embodiment.
Fig. 2A is a diagram showing a first operation mode and a seventh operation mode of an air drying circuit of the embodiment.
Fig. 2B is a diagram showing a second operation mode of the air drying circuit according to the embodiment.
Fig. 2C is a diagram showing a third operation mode and an eighth operation mode of the air drying circuit according to the embodiment.
Fig. 2D is a diagram showing a fourth operation mode of the air drying circuit according to the embodiment.
Fig. 2E is a diagram showing a fifth operation mode of the air drying circuit according to the embodiment.
Fig. 2F is a diagram showing a sixth operation mode of the air drying circuit according to the embodiment.
Fig. 3 a transition diagram showing transitions of the operation of the air drying circuit according to the embodiment.
Fig. 4 is a flowchart showing transitions from the first operation mode of the air drying circuit according to the embodiment.
Fig. 5 is a flowchart showing transitions from the second operation mode and the third operation mode of the air drying circuit according to the embodiment.
Fig. 6 is a flowchart showing transitions from the fifth operation mode of the air drying circuit according to the embodiment.
Fig. 7 is a flowchart showing transitions from the seventh operation mode of the air drying circuit according to the embodiment.
Fig. 8 is a flowchart showing transitions from the eighth operation mode of the air drying circuit according to the embodiment.
Fig. 9 is a diagram showing temporal changes in the dew point of compressed dried air in the air drying circuit according to the embodiment, and showing calculation of a feature used for determining deterioration of the desiccant.
Fig. 10 is a diagram showing temporal changes in the dew point of compressed dried air in the air drying circuit according to the embodiment, and showing calculation of a feature used for determining deterioration of the desiccant.
Fig. 11 is a flowchart showing desiccant deterioration determination of the air drying circuit according to the embodiment.
Fig. 12 is a flowchart showing desiccant deterioration determination of the air drying circuit according to the embodiment.

DESCRIPTION OF EMBODIMENTS

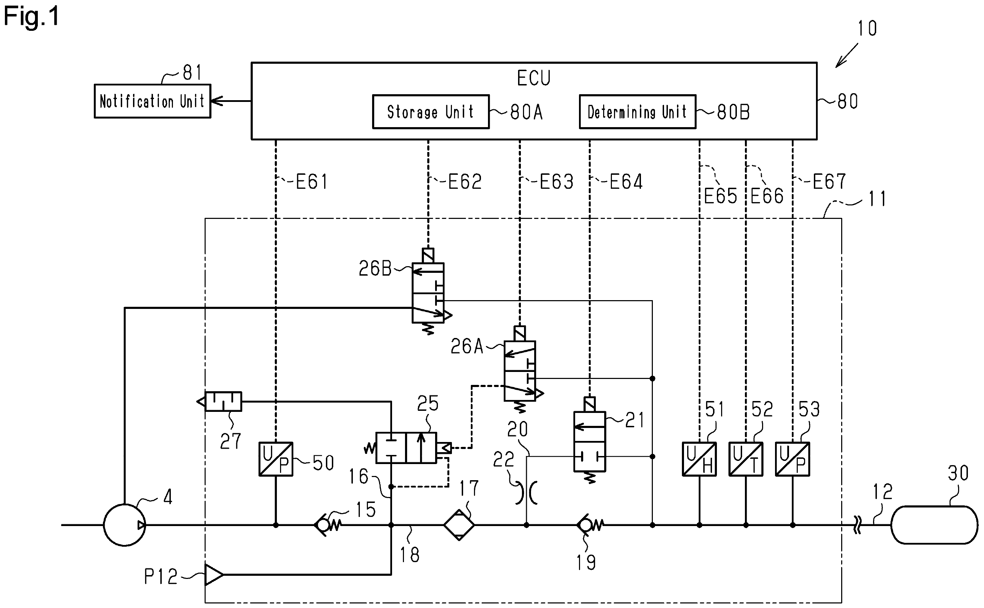

An air supply system according to an embodiment will now be described with reference to Figs. 1 to 12. The air supply system is mounted on a vehicle such as a truck, a bus, or a construction machine. Compressed dried air supplied by the air supply system is used in a pneumatic device such as a brake system mounted on the vehicle.

Air Supply System 10

An air supply system 10 will be described with reference to Fig. 1. The air supply system 10 includes a compressor 4, an air drying circuit 11, and an electronic control unit (ECU) 80 that serves as a controller.
The ECU 80 is connected to the air drying circuit 11 by wires E61 to E67. The ECU 80 may be implemented by one or more processors that execute various processes in accordance with computer programs (software). The processes executed by the ECU 80, that is, the processor, include processes of a control method for the air supply system 10. The control method for the air supply system 10 includes a supplying step, a regeneration step, and a determining step, which will be discussed below. The ECU 80 may include one or more dedicated hardware circuits such as an application-specific integrated circuit (ASIC) that executes at least a part of various processes executed by itself. That is, the ECU 80 may be circuitry including: (1) one or more processors that operate according to a computer program (software), (2) one or more dedicated hardware circuits that execute at least part of various types of processes, or (3) a combination thereof. The processor includes a CPU and memory such as a RAM, a ROM, and the like. The memory stores program code or instructions configured to cause the CPU to execute processes. The memory, which is a computer-readable medium, includes any type of media that are accessible by general-purpose computers and dedicated computers. The programs stored in the computer-readable medium include a control program for the air supply system 10. The control program for an air supply system 10 includes the supplying step, the regeneration step, and the determining step. The ECU 80 further includes a storage unit 80A that stores results of operations of the air drying circuit 11. The storage unit 80A may be a non-volatile storage unit or a volatile storage unit and may be the same as or different from the storage unit that stores the control program.

The ECU 80 is connected to other ECUs (not shown) mounted in the vehicle, such as an engine ECU and a brake ECU, through a vehicle on-board network such as a controller area network (CAN). The ECU 80 obtains information indicating the state of vehicle from the ECUs. The information indicating the vehicle state includes, for example, the off-state information of the ignition switch, the vehicle speed, and the driving information of the engine.

The air supply system 10 includes a notification unit 81. The notification unit 81 is connected to the ECU 80. The notification unit 81 issues notification regarding the state of the desiccant. The notification unit 81 is preferably a unit that can be noticed by the driver of the vehicle, and is a speaker that emits a sound, a light that emits light, a display device, or the like.

The state of the compressor 4 is switched, based on command values from the ECU 80, between an operating state (loaded operation), in which air is compressed and delivered, and a non-operating state (idling operation), in which air is not compressed. The compressor 4 is driven by power transmitted from a rotary drive source such as an engine.

The air drying circuit 11 includes, for example, an air dryer. The air drying circuit 11 is connected to the ECU 80 and removes water and the like contained in the compressed air delivered from the compressor 4 during a loaded operation. The air drying circuit 11 delivers dried compressed air (hereafter, referred to as compressed dried air) to a supply circuit 12. The compressed dried air supplied to the supply circuit 12 is stored in an air tank 30. Such an operation is referred to as a supplying operation.

The compressed dried air stored in the air tank 30 is supplied to a pneumatic device such as a brake system mounted on the vehicle. For example, when the brakes are frequently activated, for example, when the vehicle is traveling on a downhill road or in an urban area, a relatively large amount of the compressed dried air stored in the air tank 30 is consumed. In contrast, when the brakes are activated less frequently, a relatively small amount of the compressed dried air stored in the air tank 30 is consumed.

The air drying circuit 11 includes a maintenance port P12. The maintenance port P12 supplies air to the air drying circuit 11 during maintenance.

Air Drying Circuit 11

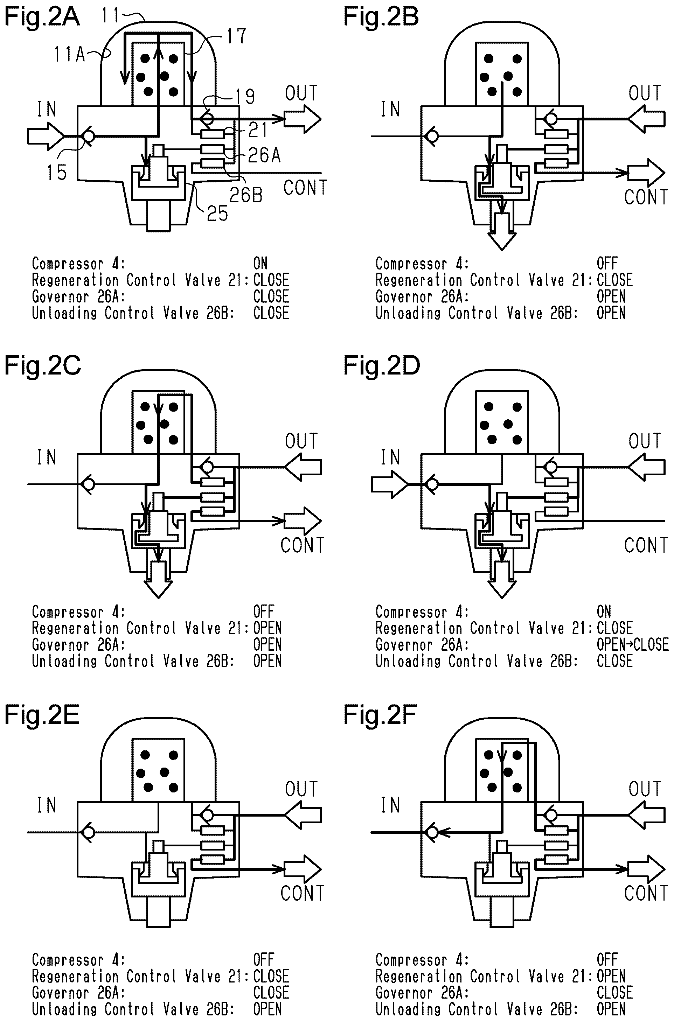

The air drying circuit 11 includes a filter 17, for example, inside a case 11A (refer to Fig. 2A). The filter 17 is arranged in an air supply passage 18, which connects the compressor 4 and the supply circuit 12 to each other. The filter 17 includes a desiccant. The filter 17 may also include an oil trapping portion that traps oil in addition to the desiccant. The oil trapping portion may be anything as long as the oil trapping portion traps oil while allowing air to pass through. For example, the oil trapping portion may be a foam such as urethane foam, a metal material having numerous vent holes, and a glass fiber filter.

The filter 17 causes the compressed air delivered from the compressor 4 to pass through the desiccant, thereby removing water contained in the compressed air to dry the compressed air. That is, the filter 17 generates compressed dried air. In addition, the desiccant or the oil trapping portion traps oil contained in the compressed air to purify the compressed air. The compressed air that has passed through the filter 17 is supplied to the supply circuit 12 via a downstream check valve 19, which permits air to flow only to the downstream side of the filter 17. That is, when the filter 17 is disposed on the upstream side, and the supply circuit 12 is disposed on the downstream side, the downstream check valve 19 permits air to flow only from the upstream side to the downstream side. The downstream check valve 19 has a specified valve opening pressure (sealing pressure). Thus, when compressed air flows, the pressure on the upstream side is higher than the pressure on the downstream side by the valve opening pressure.

Further, a bypass passage 20, which bypasses the downstream check valve 19, is provided on the downstream side of the filter 17. The bypass passage 20 is provided in parallel to the downstream check valve 19. The bypass passage 20 includes a regeneration control valve 21.

The regeneration control valve 21 is an electromagnetic valve controlled by the ECU 80. The ECU 80 controls energization/de-energization (activation/deactivation) of the regeneration control valve 21 via the wire E64, thereby switching the operation of the regeneration control valve 21. In a de-energized state, the regeneration control valve 21 is closed to block the bypass passage 20. In an energized state, the regeneration control valve 21 is open to open the bypass passage 20. The ECU 80 receives, for example, a value of air pressure in the air tank 30 and operates the regeneration control valve 21 if the value of air pressure exceeds a specified range.

The bypass passage 20 includes an orifice 22 between the regeneration control valve 21 and the filter 17. When the regeneration control valve 21 is energized, the compressed dried air in the supply circuit 12 is delivered to the filter 17 via the bypass passage 20 with the flow rate being regulated by the orifice 22. The compressed dried air delivered to the filter 17 flows backward from the downstream side to the upstream side through the filter 17 to pass through the filter 17. This process regenerates the filter 17 and is referred to as a regeneration operation of a dryer.

Since the compressed dried air delivered to the filter 17 at this time has passed through the filter 17 from the air supply passage 18 and supplied to the supply circuit 12 as dry and clean air, the compressed dried air removes water and oil trapped in the filter 17 from the filter 17. In the normal control, when the pressure in the air tank 30 reaches an upper limit value (cut-out pressure), the ECU 80 opens the regeneration control valve 21. When the pressure in the air tank 30 drops to a lower limit value (cut-in pressure), the ECU 80 closes the regeneration control valve 21, which has been open.

A branch passage 16 branches off a section between the compressor 4 and the filter 17. A drain valve 25 is disposed on the branch passage 16, and a drain port 27 is connected to the end of the branch passage 16.

Collected liquid, which a fluid containing water and oil removed from the filter 17, is delivered to the drain valve 25 together with compressed air. The drain valve 25 is a pneumatic valve driven by air pressure and is disposed in a section of the branch passage 16 between the filter 17 and the drain port 27. The drain valve 25 is a two-port two-position valve, which changes the position between a closed position and an open position. The drain valve 25 delivers collected liquid to the drain port 27 when in the open position. The collected liquid discharged from the drain port 27 may be recovered by an oil separator (not shown). The collected liquid corresponds to the fluid that has passed through the filter 17 in the inverse direction.

The drain valve 25 is controlled by a governor 26A. The governor 26A is an electromagnetic valve controlled by the ECU 80. The ECU 80 controls energization/deenergization (activation/deactivation) of the governor 26A via the wire E63, thereby switching the operation of the governor 26A. When energized, the governor 26A inputs an air-pressure signal to the drain valve 25 to open the drain valve 25. When de-energized, the governor 26A does not deliver an air-pressure signal to the drain valve 25, thereby exposing the drain valve 25 to the atmospheric pressure, thereby closing the drain valve 25.

The drain valve 25 is maintained in the closed position when receiving no air-pressure signal from the governor 26A. The drain valve 25 is switched to the open position when receiving an air-pressure signal from the governor 26A. Further, when the pressure at the input port of the drain valve 25, which is connected to the compressor 4, exceeds an upper limit, the drain valve 25 is forcibly switched to the open position.

An upstream check valve 15 is arranged between the compressor 4 and the filter 17 and between the compressor 4 and the branch passage 16. When the compressor 4 is disposed on the upstream side, and the filter 17 is disposed on the downstream side, the upstream check valve 15 permits air to flow only from the upstream side to the downstream side. The upstream check valve 15 has a specified valve opening pressure (sealing pressure). Thus, when compressed air flows, the pressure on the upstream side is higher than the pressure on the downstream side by the valve opening pressure. A reed valve at the outlet of the compressor 4 is provided on the upstream side of the upstream check valve 15. The branch passage 16 and the filter 17 are provided on the downstream side of the upstream check valve 15.

Compressor 4

The compressor 4 is controlled by an unloading control valve 26B. The unloading control valve 26B is an electromagnetic valve controlled by the ECU 80. The ECU 80 controls energization/de-energization (activation/deactivation) of the unloading control valve 26B via the wire E62, thereby switching the operation of the unloading control valve 26B. When de-energized, the unloading control valve 26B switches to the open position and opens the passage between the unloading control valve 26B and the compressor 4 to the atmosphere. When energized, the unloading control valve 26B switches to a supply position and sends an air pressure signal, which is compressed air, to the compressor 4.

The state of the compressor 4 is switched to the non-operating state (idling operation) when the air pressure signal is input from the unloading control valve 26B. For example, when the pressure in the supply circuit 12 reaches a cut-out pressure, the supply of compressed dried air is unnecessary. When the pressure in the supply circuit 12 reaches the cut-out pressure and the ECU 80 energizes the unloading control valve 26B (activates the unloading control valve 26B), the unloading control valve 26B is switched to the supply position. This supplies the air pressure signal from the unloading control valve 26B to the compressor 4 and switches the compressor 4 to the non-operating state.

Sensors

A pressure sensor 50 is arranged between the compressor 4 and the upstream check valve 15. The pressure sensor 50 is connected to the air supply passage 18, and measures the air pressure of the air supply passage 18 and sends the measurement result to the ECU 80 via the wire E61.

A humidity sensor 51 and a temperature sensor 52 are arranged between the downstream check valve 19 and the supply circuit 12. The humidity sensor 51 measures the humidity of the compressed dried air on the downstream side of the filter 17 and outputs the measurement result to the ECU 80 via the wire E65. The temperature sensor 52 measures the temperature of the compressed dried air on the downstream side of the filter 17 and outputs the measurement result to the ECU 80 via the wire E66. The ECU 80 determines the dryness state of the compressed dried air based on the humidity and the temperature of the compressed dried air input from the humidity sensor 51 and the temperature sensor 52. That is, the humidity and the temperature of the compressed dried air are indicators indicating the dryness state of the compressed dried air.

The ECU 80 determines deterioration of the desiccant based on changes in the dew point (dew point temperature) of the compressed dried air during the supplying operation. The ECU 80 includes a determining unit 80B that determines deterioration of the desiccant. The ECU 80 calculates the dew point of the compressed dried air (supplied air) supplied to the air tank 30 based on the humidity and the temperature of the supply circuit 12 when the compressed dried air is supplied to the air tank 30. The ECU 80 can calculate the dew point (dew point temperature) by substituting the humidity and the temperature measured by the humidity sensor 51 and the temperature sensor 52 into the Tetens equation.

The determining unit 80B calculates a feature from temporal changes in the dew point of the compressed dried air during the supplying operation, and determines the deterioration of the desiccant based on the calculated feature. The determining unit 80B calculates a feature analysis of desiccant deterioration (FDD) as the feature from data of the temporal changes in the dew point of the compressed dried air. The feature analysis of desiccant deterioration (FDD) indicates a dehumidification state of the compressed dried air after passing through the desiccant. The FDD increases as the dehumidification state of the compressed dried air improves, and decreases as the dehumidification state deteriorates due to desiccant deterioration. The determining unit 80B accumulates the average values of the features and the passed-through air amounts for all cycles from the cycle in which the regeneration operation was performed to the cycle in which the regeneration operation was not performed. Using the accumulated average values of multiple features, the determining unit 80B determines whether the desiccant has deteriorated based on the ratio at which the accumulated data exceed a threshold. Alternatively, the determining unit 80B may determine deterioration of the desiccant using the features from cycles in which the regeneration operation was not executed.

If the feature obtained is less than any of the accumulated features, the determining unit 80B deletes the data that includes the maximum accumulated feature and the corresponding passed-through air amount. During the supplying operation, the determining unit 80B obtains and accumulates the passed-through air amounts together with the features. If the passed-through air amount of the subsequently obtained feature is less than the average of the passed-through air amounts when the accumulated feature has the minimum value, the determining unit 80B deletes the data including the minimum value of the accumulated features and the corresponding passed-through air amount. The determining unit 80B obtains the passed-through air amount from an accumulated value of a discharge flow rate per unit time during the supplying operation. The determining unit 80B calculates a dehumidification position ratio (DPR) of the desiccant dehumidification capacity as the feature from the data of the temporal changes in the dew point of the compressed dried air. The dehumidification position ratio (DPR) indicates an allowable margin relative to the limit of the dehumidification capacity of the desiccant. The value of the DPR increases as the allowable margin relative to the limit of the desiccant dehumidification capacity increases and decreases as the amount of passing air approaches a limit passed-through air amount. When the passed-through air amount exceeds the limit passed-through air amount, the value of the DPR is the minimum.

The determining unit 80B causes the notification unit 81 to start notification when determining that the desiccant has deteriorated. The determining unit 80B may give priority to the execution of the notification in a case in which the time for replacing the desiccant has been reached before determining the deterioration of the desiccant. After determining that the desiccant has deteriorated, the determining unit 80B may continuously determine whether the desiccant has deteriorated. After determining that the desiccant has deteriorated and causing the notification unit 81 to start the notification, the determining unit 80B may stop the notification by the notification unit 81 when determining that the desiccant is not deteriorated.

The ECU 80 calculates a water content in the supplied air based on the humidity and the temperature of the compressed dried air when supplied to the air tank 30, and calculates a reference water content in the tank air based on the humidity and the temperature of the compressed dried air during regeneration, in which the compressed dried air is caused to flow back from the air tank 30. A water content in the tank air is obtained from Equation (1). The water content in the supplied air is the amount of water delivered to the air tank 30 during the supplying operation, and can be calculated based on the humidity and the temperature during the supplying operation, and the amount of supplied air during a supplying cycle. The reference water content in the tank air is the amount of water present in the air tank 30 when the amount of water is updated, and can be calculated based on the humidity and the temperature or on the water content in the tank air during regeneration. A water content in the consumed air is the amount of water delivered from the air tank 30 through the consumption of the compressed dried air, and can be calculated based on the water content in the tank air and the amount of air consumed during a consumption cycle.

$$\text{(Water content in tank air)} = \text{(Reference water content in tank air)} + \text{(Change amount of water content in tank air)} \qquad (1)$$

(Change amount of water content in tank air) = (Water content in supplied air) - (Water content in consumed air)

Further, a pressure sensor 53 is arranged between the downstream check valve 19 and the supply circuit 12. For example, the pressure sensor 53 is capable of detecting the air pressure in the air tank 30, which stores the compressed dried air, and is connected to the ECU 80 via the wire E67. The pressure between the downstream check valve 19 and the supply circuit 12 is the same as the pressure in the air tank 30, and the detection result of the pressure sensor 53 can be used as the pressure in the air tank 30. The pressure sensor 53 may be arranged in the supply circuit 12 or the air tank 30.

Operation of Air Drying Circuit 11

As shown in Figs. 2A to 2F, the air drying circuit 11 includes operation modes including at least a first operation mode to an eighth operation mode.

First Operation Mode

As shown in Fig. 2A, the first operation mode is a mode in which a supplying operation is performed. Specifically, a normal dehumidification (loading) is performed in the first operation mode. In the first operation mode, the regeneration control valve 21 and the unloading control valve 26B are closed (indicated by CLOSE in the drawing), and the governor 26A is shifted to an open position, at which the governor 26A does not input an air-pressure signal to the compressor 4 (indicated by CLOSE in the drawing). At this time, none of the regeneration control valve 21, the governor 26A, and the unloading control valve 26B is energized. Further, the governor 26A and the unloading control valve 26B expose, to the atmosphere, a port of the compressor 4 and a port of the drain valve 25 that are connected to the downstream sides of the governor 26A and the unloading control valve 26B. In the first operation mode, when compressed air is supplied from the compressor 4 (indicated by ON in the drawing), water and the like are removed by the filter 17 and the compressed air is supplied to the supply circuit 12. That is, the compressed air or the compressed dried air flows in a forward direction (first direction), which is the direction from the filter 17 toward the air tank 30.

Second Operation Mode

As shown in Fig. 2B, the second operation mode is a mode in which a purging operation is performed to cause the compressed dried air in the air drying circuit 11 to pass through the filter 17 to purify the filter 17. In the second operation mode, the regeneration control valve 21 is closed, and the governor 26A and the unloading control valve 26B are open (indicated by OPEN in the drawing). At this time, the governor 26A and the unloading control valve 26B are energized, and the ports of the compressor 4 and the ports of the drain valve 25 that are connected to the downstream sides of the governor 26A and the unloading control valve 26B are respectively connected to the upstream sides (the side corresponding to the supply circuit 12). As a result, the compressor 4 is switched to the non-operating state (indicated by OFF in the drawing), and the drain valve 25 is opened. As a result, the compressed dried air between the downstream check valve 19 and the filter 17 flows (flows back) within the filter 17 in an inverse direction that is opposite to the forward direction, which is the flow direction of air in the first operation mode (supplying operation). That is, the compressed dried air flows in the inverse direction, which is a direction from the air tank 30 toward the filter 17 (second direction). The water and the like trapped by the filter 17 is drained as collected liquid through the drain port 27. The air pressure of the filter 17 and the air supply passage 18 are exposed to the atmospheric pressure.

Third Operation Mode

As shown in Fig. 2C, the third operation mode is a mode in which a regeneration operation is performed to regenerate the filter 17. In the third operation mode, the regeneration control valve 21 and the unloading control valve 26B are open, and the governor 26A is located at an input position. At this time, the regeneration control valve 21 is energized, in addition to the governor 26A and the unloading control valve 26B. In the third operation mode, the compressor 4 is shifted to the non-operating state, and the compressed dried air stored in the supply circuit 12 or the air tank 30 is caused to flow back to the filter 17 and is discharged from the drain port 27. This removes water and the like trapped by the filter 17. The second operation mode and the third operation mode both purify the filter 17, but the third operation mode differs from the second operation mode at least in that the regeneration control valve 21 is opened. Thus, in the third operation mode, the compressed dried air in the air tank 30 is caused to pass through the filter 17 via the supply circuit 12 and the bypass passage 20. Therefore, the effect of purifying the filter 17 is higher than in the second operation mode. The air pressures in the filter 17 and the air supply passage 18 are exposed to the atmospheric pressure also in the third operation mode.

Fourth Operation Mode

As shown in Fig. 2D, the fourth operation mode is a mode in which an oil-cut operation is performed to discharge the compressed air supplied from the compressor 4, while operating the compressor 4. When the compressor 4 is in the non-operating state, oil may collect in the compression chamber of the compressor 4. If the compressor 4 is switched to the operating state with oil collected in the compression chamber, the amount of oil contained in the compressed air delivered from the compression chamber may increase. The oil-cut operation is performed for discharging compressed air containing excessive oil via the drain valve 25 in order to reduce the load on the filter 17. In the fourth operation mode, the regeneration control valve 21 and the unloading control valve 26B are closed, and the governor 26A is closed after being opened for a certain period of time. In the fourth operation mode, when the compressor 4 is in the operating state, compressed air supplied from the compressor 4 is discharged from the drain port 27 for a certain period of time. This prevents the amount of water and oil trapped by the filter 17 from increasing immediately after the compressor 4 is switched from the non-operating state to the operating state. The oil-cut operation may be performed when oil from the compressor 4 in the operating state increases as the engine speed increases and when the load on the engine is relatively high.

Fifth Operation Mode

As shown in Fig. 2E, the fifth operation mode is a mode in which a purgeless supply stop operation is performed to stop the compressor 4 without purging. In the fifth operation mode, the regeneration control valve 21 and the governor 26A are closed, and the unloading control valve 26B is opened. In the fifth operation mode, when the compressor 4 is in the non-operating state, the compressed air or the compressed dried air that remains in the air supply passage 18 or in the desiccant of the filter 17 is not discharged from the drain port 27, so that the air pressure is maintained.

Sixth Operation Mode

As shown in Fig. 2F, the sixth operation mode is a mode in which a compressor assist operation is performed to execute a pressurization process. In the sixth operation mode, the regeneration control valve 21 and the unloading control valve 26B are opened, and the governor 26A is in the open position. In the sixth operation mode, when the compressor 4 is in the non-operating state, the compressed air in the supply circuit 12 is supplied (caused to flow backward) to the air supply passage 18 and the desiccant in the filter 17 to maintain the pressure in the air supply passage 18 and the filter 17 higher than the atmospheric pressure so that the back pressure (air pressure) of the upstream check valve 15 is maintained at a pressure higher than the atmospheric pressure. This limits the generation of negative pressure in the cylinder and reduces the operation load on the compressor 4 during the idling operation. Specifically, during the idling operation of the compressor 4, the drain valve 25 is closed so that compressed air supplied from the compressor 4 maintains the air pressure in the desiccant in the filter 17 and the air supply passage 18 higher than the atmospheric pressure.

Seventh Operation Mode

As shown in Fig. 2A, the seventh operation mode is a mode in which a regenerative supplying operation is performed to execute dehumidification (loading) during a regenerative operation, in which the compressor 4 operates while the engine is in a no-load condition. In the seventh operation mode, the regeneration control valve 21, the governor 26A, and the unloading control valve 26B are closed (indicated by CLOSE in the drawing) in the same manner as the first operation mode.

Eighth Operation Mode

As shown in Fig. 2C, the eighth operation mode is a mode in which forced regeneration operation is performed to forcibly regenerate the filter 17. In the eighth operation mode, the regeneration control valve 21, the governor 26A, and the unloading control valve 26B are opened in the same manner as the third operation mode.

Transitions of Operation Modes

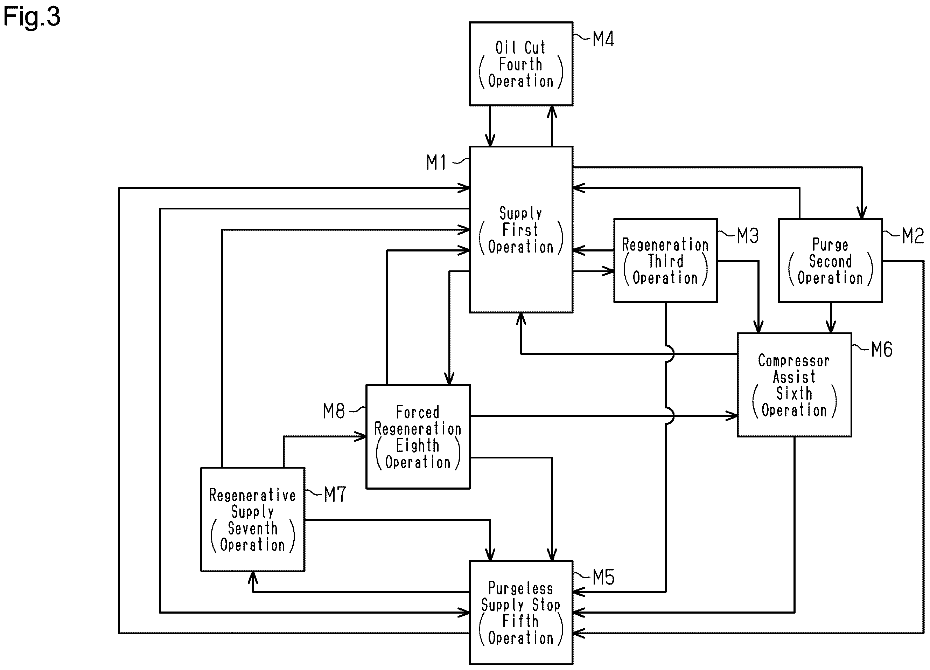

As shown in Fig. 3, the eight operation modes of the air drying circuit 11 are changed based on determinations made by the ECU 80.

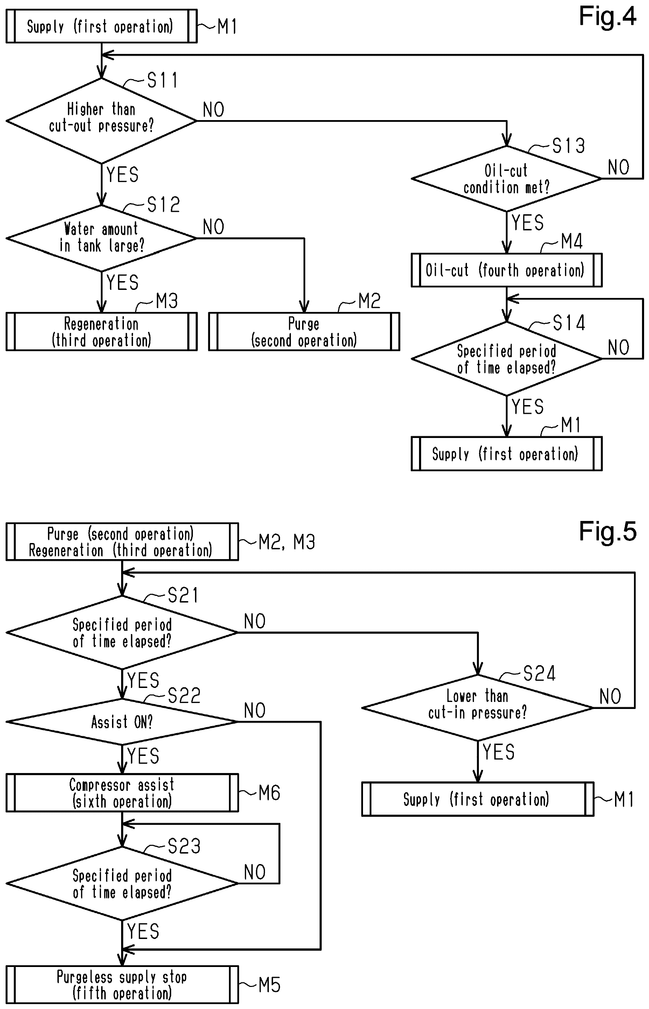

A transition from each operation mode will now be described with reference to Figs. 4 to 8.

The ECU 80 executes a supplying step that supplies compressed air, which is output by the compressor 4, to the supply circuit 12. The supplying step is started, for example, when the engine is started. In the supplying step, the air drying circuit 11 is in a supply (first operation) mode M1.

As shown in Fig. 4, in the supply (first operation) mode M1, the ECU 80 determines whether the pressure in the supply circuit 12 is higher than the cut-out pressure (step S11). Specifically, the ECU 80 obtains the pressure in the air tank 30 detected by the pressure sensor 53 and determines whether the pressure has reached the cut-out pressure.

When determining that the pressure in the supply circuit 12 has reached the cut-out pressure (step S11: YES), the ECU 80 determines whether the amount of water in the air tank 30 is relatively large (step S12). When the amount of water in the air tank 30 is greater than or equal to a specified value, the ECU 80 needs to regenerate the desiccant of the filter 17. Thus, the ECU 80 determines the amount of water in the air tank 30.

When determining that the amount of water in the air tank 30 is greater than or equal to the specified value (step S12: YES), the ECU 80 transitions to a regeneration (third operation) mode M3, in which the ECU 80 causes the compressed dried air stored in the air tank 30 to pass through the filter 17 to regenerate the desiccant of the filter 17.

When determining that the amount of water in the air tank 30 is less than the specified value (step S12: NO), the ECU 80 transitions to a purge (second operation) mode M2, in which the ECU 80 causes the compressed dried air between the downstream check valve 19 and the filter 17 to pass through the filter 17, so that water and the like trapped by the filter 17 are discharged as collected liquid through the drain port 27.

When determining that the pressure in the supply circuit 12 has not reached the cut-out pressure (step S11: NO), the ECU 80 determines whether a condition for transitioning to an oil-cut (fourth operation) mode M4 is met (step S13). In other words, the ECU 80 determines whether all the following conditions for transitioning to the oil-cut (fourth operation) mode M4 are met: a certain period of time has elapsed, the number of times the oil-cut operation has been executed is less than a prescribed number of times, and the rate of operation of the compressor 4 is relatively low. When determining that the condition for transitioning to the oil-cut (fourth operation) mode M4 is not met (step S13: NO), the ECU 80 returns to step S11.

When determining that the condition for transitioning to the oil-cut (fourth operation) mode M4 is met (step S13: YES), the ECU 80 proceeds to the oil-cut (fourth operation) mode M4. In the oil-cut (fourth operation) mode M4, the ECU 80 discharges compressed air supplied from the compressor 4 while operating the compressor 4.

After transitioning to the oil-cut (fourth operation) mode M4, the ECU 80 determines whether a specified period of time has elapsed (step S14). In other words, the ECU 80 performs the oil-cut (fourth operation) mode M4 for the specified period of time. When determining that the specified period of time has elapsed (step S14: YES), the ECU 80 proceeds to the supply (first operation) mode M 1.

In the supply (first operation) mode M1, the ECU 80 may determine whether a condition for transitioning to a forced regeneration (eighth operation) mode M8 is met. When determining that the condition for transitioning to the forced regeneration (eighth operation) mode M8 is met, the ECU 80 may transition to the forced regeneration (eighth operation) mode M8. In the forced regeneration (eighth operation) mode M8, the filter 17 is forcibly regenerated.

As shown in Fig. 5, in the purge (second operation) mode M2 and the regeneration (third operation) mode M3, the ECU 80 determines whether a specified period of time has elapsed (step S21). In other words, the ECU 80 executes the purge (second operation) mode M2 and the regeneration (third operation) mode M3 for the specified period of time.

When determining that the specified period of time has not elapsed (step S21: NO), the ECU 80 determines whether the pressure in the supply circuit 12 is lower than a cut-in pressure (step S24). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S24: YES), the ECU 80 determines that the compressed dried air is insufficient and transitions to the supply (first operation) mode M1. When determining that the pressure in the supply circuit 12 has not reached the cut-in pressure (step S24: NO), the ECU 80 returns the process to step S21.

When determining that the specified period of time has elapsed (step S21: YES), the ECU 80 determines whether the compressor assist (sixth operation) process is enabled (step S22).

When determining that the compressor assist (sixth operation) process is disabled (step S22: NO), the ECU 80 proceeds to the purgeless supply stop mode (fifth operation) M5, in which the compressor 4 is stopped without purging.

When determining that the compressor assist (sixth operation) process is enabled (step S22: YES), the ECU 80 transitions to the compressor assist (sixth operation) mode M6, which performs the pressurization process.

After transitioning to the compressor assist (sixth operation) mode M6, the ECU 80 determines whether a specified period of time has elapsed (step S23). In other words, the ECU 80 executes the compressor assist (sixth operation) mode M6 for the specified period of time. When determining that the specified period of time has elapsed (step S23: YES), the ECU 80 transitions to the purgeless supply stop (fifth operation) mode M5.

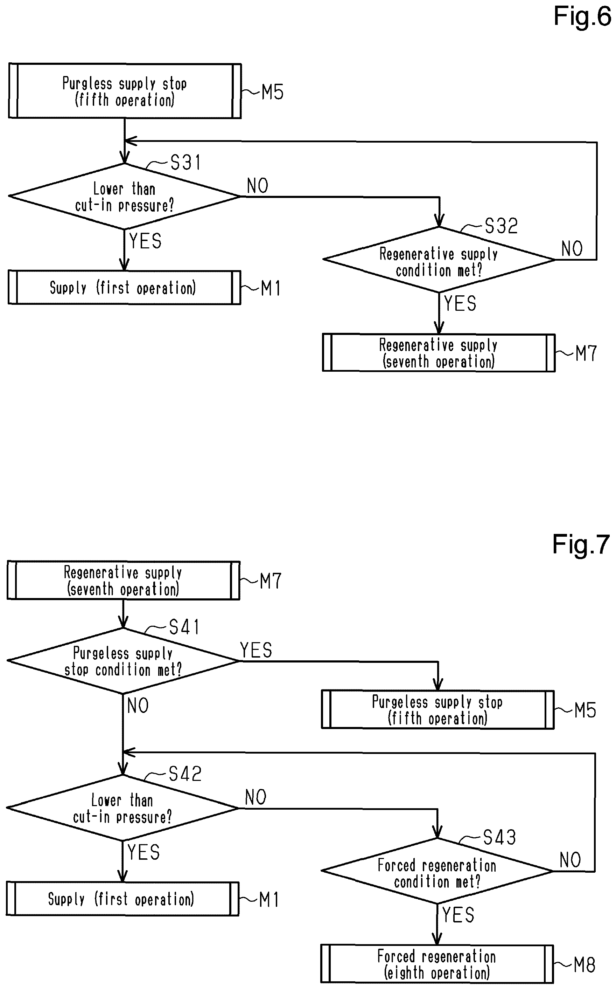

As shown in Fig. 6, in the purgeless supply stop (fifth operation) mode M5, the ECU 80 determines whether the pressure in the supply circuit 12 is lower than the cut-in pressure (step S31). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S31: YES), the ECU 80 determines that the compressed dried air is insufficient and transitions to the supply (first operation) mode M1.

When determining that the pressure in the supply circuit 12 has not reached the cut-in pressure (step S31: NO), the ECU 80 determines whether conditions for transitioning to a regenerative supply (seventh operation) mode M7 are met (step S32). In other words, the ECU 80 determines whether all the following conditions for transitioning to the regenerative supply (seventh operation) mode M7 are met: the vehicle is in motion, no fuel is being consumed, and the pressure in the supply circuit 12 is lower than a threshold. When determining that the conditions for transitioning to the regenerative supply (seventh operation) mode M7 are not met (step S32: NO), the ECU 80 returns to step S31.

When determining that the conditions for transitioning to the regenerative supply (seventh operation) mode M7 are met (step S32: YES), the ECU 80 proceeds to the regenerative supply (seventh operation) mode M7, which performs dehumidification (loading) during a regenerative operation.

As shown in Fig. 7, in the regenerative supply (seventh operation) mode M7, the ECU 80 determines whether a condition for transitioning to the purgeless supply stop (fifth operation) mode M5 is met (step S41). In other words, the ECU 80 determines whether at least one of the following conditions for transitioning to the purgeless supply stop (fifth operation) mode M5 is met: the pressure in the supply circuit 12 is higher than the cut-out pressure, a specified period of time has elapsed, and the engine has a relatively high fuel consumption. When determining that the condition for transitioning to the purgeless supply stop (fifth operation) mode M5 is met (step S41: YES), the ECU 80 transitions to the purgeless supply stop (fifth operation) mode M5.

When determining that the condition for transitioning to the purgeless supply stop (fifth operation) mode M5 is not met (step S41: NO), the ECU 80 determines whether the pressure in the supply circuit 12 is lower than the cut-in pressure (step S42). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S42: YES), the ECU 80 determines that the compressed dried air is insufficient and transitions to the supply (first operation) mode M1.

When determining that the pressure in the supply circuit 12 has not reached the cut-in pressure (step S42: NO), the ECU 80 determines whether the conditions for transitioning to the forced regeneration (eighth operation) mode M8 are met (step S43). In other words, the ECU 80 determines whether both of the following conditions for transitioning to the forced regeneration (eighth operation) mode M8 are met: the pressure in the supply circuit 12 is higher than the threshold, and the amount of water in the air tank 30 is relatively large. In the regenerative supply (seventh operation) mode M7, the ECU 80 determines the dryness state of the compressed dried air based on the water content in the tank air of the air tank 30. The water content in the tank air of the air tank 30 is an indicator indicating the dryness state of the compressed dried air. If the water content in the tank air is greater than or equal to a specified value, the ECU 80 determines that the amount of water in the air tank 30 is relatively large. If the water content in the tank air is less than the specified value, the ECU 80 determines that the amount of water in the air tank 30 is relatively small. When determining that the condition for transitioning to the forced regeneration (eighth operation) mode M8 is not met (step S43: NO), the ECU 80 returns to step S42.

On the other hand, when determining that the condition for transitioning to the forced regeneration (eighth operation) mode M8 is met (step S43: YES), the ECU 80 transitions to the forced regeneration (eighth operation) mode M8, in which the filter 17 is forcibly regenerated. When determining that the amount of water is relatively large and other conditions are met, the ECU 80 executes the forced regeneration (eighth operation) mode M8, in which compressed dried air flows in the inverse direction.

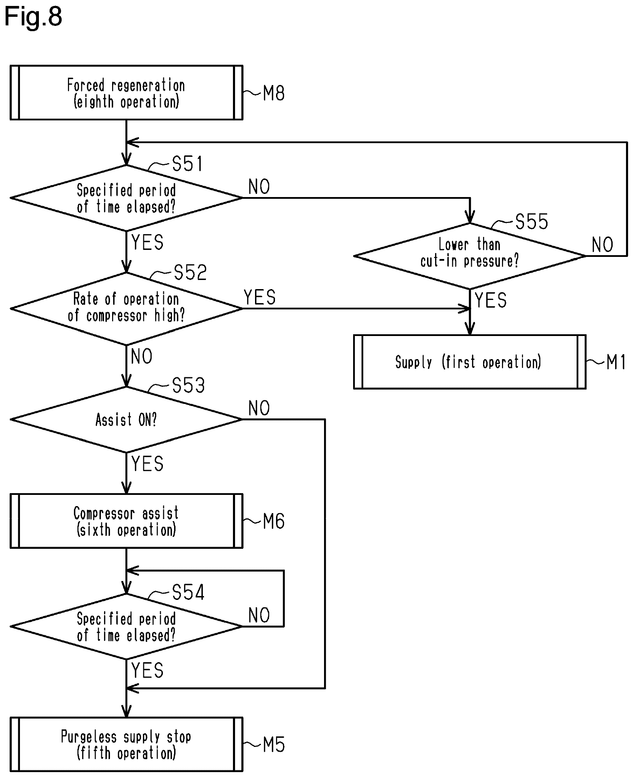

As shown in Fig. 8, in the forced regeneration (eighth operation) mode M8, the ECU 80 determines whether a specified period of time has elapsed (step S51). In other words, the ECU 80 executes the forced regeneration (eighth operation) mode M8 for the specified period of time.

When determining that the specified period of time has not elapsed (step S51: NO), the ECU 80 determines whether the pressure in the supply circuit 12 is lower than a cut-in pressure (step S55). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S55: YES), the ECU 80 determines that the compressed dried air is insufficient and transitions to the supply (first operation) mode M1. When determining that the pressure in the supply circuit 12 has not reached the cut-in pressure (step S55: NO), the ECU 80 returns the process to step S51.

When determining that the specified period of time has elapsed (step S51: YES), the ECU 80 determines whether the rate of operation of the compressor 4 is relatively high (step S52). Specifically, the ECU 80 determines whether the load on the compressor 4 during operation is relatively high based on the rate of operation of the compressor 4.

When determining that the rate of operation of the compressor 4 is relatively high (step S52: YES), the ECU 80 determines that the compressor assist (sixth operation) is not required, and transitions to the supply (first operation) mode M 1.

When determining that the rate of operation of the compressor 4 is relatively low (step S52: NO), the ECU 80 determines whether the compressor assist (sixth operation) process is enabled (step S53) to perform the compressor assist (sixth operation).

When determining that the compressor assist (sixth operation) process is disabled (step S53: NO), the ECU 80 transitions to a purgeless supply stop (fifth operation) mode M5. When determining that the compressor assist (sixth operation) process is enabled (step S53: YES), the ECU 80 transitions to the compressor assist (sixth operation) mode M6.

After transitioning to the compressor assist (sixth operation) mode M6, the ECU 80 determines whether a specified period of time has elapsed (step S54). In other words, the ECU 80 executes the compressor assist (sixth operation) mode M6 for the specified period of time. When determining that the specified period of time has elapsed (step S54: YES), the ECU 80 transitions to the purgeless supply stop (fifth operation) mode M5.

Control of Deterioration Determination of Desiccant

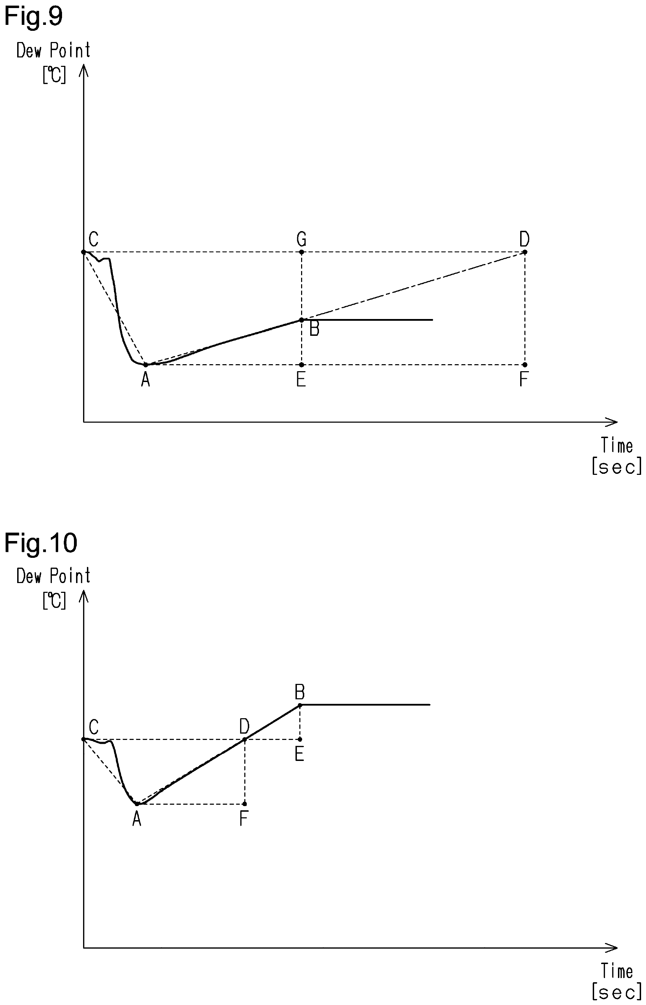

Control of deterioration determination of the desiccant in the air supply system 10 will now be described with reference to Figs. 9 to 12.

First, with reference to Figs. 9 and 10, the method for calculating the FDD, which is a feature, will be described.

As shown in Fig. 9, the FDD can be calculated from the data of temporal changes in the dew point of the compressed dried air during the supplying operation. The points used to calculate the FDD are as follows. Fig. 9 shows a case where $x2 \leq x4$ is satisfied.

Point A ($x1$, $y1$): minimum point
Point B ($x2$ $y2$): point in time at which the supplying operation ends
Point C ($x3$ $y3$): point in time at which the supplying operation starts
Point D ($x4$, $y4$): intersection of a straight line connecting points A and B and a horizontal line passing through point C
Point E ($x5$, $y5$): intersection of a horizontal line passing through point A and a vertical line passing through point B
Point F ($x6$, $y6$): intersection of a horizontal line passing through point A and a vertical line passing through point D
Point G ($x7$, $y7$): intersection of a vertical line passing through point B and a horizontal line passing through point C

When $x2 \leq x4$ is satisfied, the passed-through air amount is less than the limit passed-through air amount, so that there is an allowable margin relative to the limit passed-through air amount. At this time, the FDD is obtained from the following equation (2).

$$FDD = \text{area FDCA} - \text{area EBA} - \text{area GDFE} \ ... \ (2)$$

The point D is calculated from the following equation (3) using a slope Tu and an intercept Ic of a straight line connecting points B and A.

$$Tu = (y2 - y1)/(x2 - x1)$$

$$Ic = y2 - Tu \times x2$$

$$x4 = (y4 - Ic)/Tu \ ... \ (3)$$

The x-coordinates of the respective points are non-dimensionalized as follows.

$$x1 = x1/x2 \times 100$$

$$x2 = 100$$

$$x3 = 0$$

$$x4 = x4/x2 \times 100$$

$$x5 = x5/x2 \times 100$$

$$L6 = x6/x2 \times 100$$

$$x7 = x7/x2 \times 100$$

The DPR is an allowable margin relative to the limit of the desiccant dehumidification capacity. The DPR can be calculated from the ratio between the horizontal distance between points D and C and the horizontal distance between points G and C, as shown in the following equation (4).

$$DPR = x4/x2 \ ... \ (4)$$

As shown in Fig. 10, the FDD can be calculated from the data of temporal changes in the dew point of the compressed dried air during the supplying operation. The points used to calculate the FDD are as follows. Fig. 10 shows a case where x2 > x4 is satisfied.

Point A (x1, y1): minimum point
Point B (x2, y2): point in time at which the supplying operation ends
Point C (x3, y3): point in time at which the supplying operation starts
Point D (x4, y4): intersection of a straight line connecting points A and B and a horizontal line passing through point C
Point E (x5, y5): intersection of a vertical line passing through point B and a horizontal line passing through point C
Point F (x6, y6): intersection of a horizontal line passing through point A and a vertical line passing through point D

When x2 > x4 is satisfied, the passed-through air amount exceeds the limit passed-through air amount, and therefore there is no allowable margin relative to the limit passed-through air amount. At this time, the FDD is obtained from the following equation (5).

$$FDD = area\ FDCA - area\ FDA - area\ EDB\ ...\ (5)$$

The point D is calculated from the following equation (6) using a slope Tu and an intercept Ic of a straight line connecting points B and A.

$$Tu = (y2 - y1)/(x2 - x1)$$

$$Ic = y2 - Tu \times x2$$

$$x4 = (y4 - Ic)/Tu \ ... \ (6)$$

The x-coordinates of the respective points are non-dimensionalized as follows.

$$x1 = x1/x2 \times 100$$

$$x2 = 100$$

$$x3 = 0$$

$$x4 = x4/x2 \times 100$$

$$x5 = x5/x2 \times 100$$

$$L6 = x6/x2 \times 100$$

The DPR is an allowable margin relative to the limit of the desiccant dehumidification capacity. The DPR can be calculated from the ratio between the horizontal distance between points D and C and the horizontal distance between points B and C, as shown in the following equation (7).

$$DPR = x4/x2 \ ... \ (7)$$

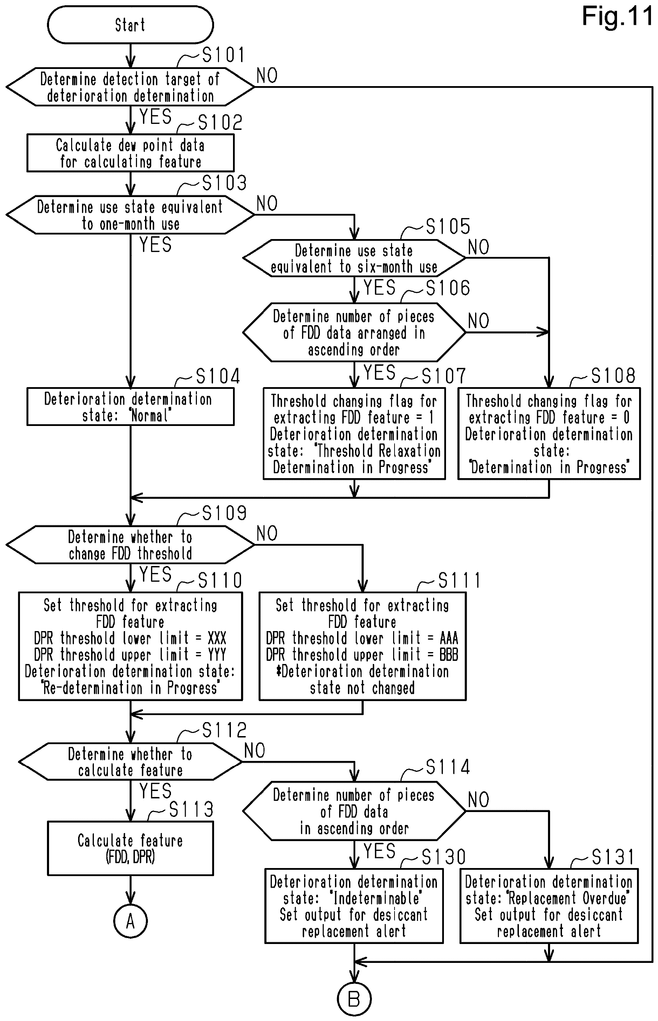

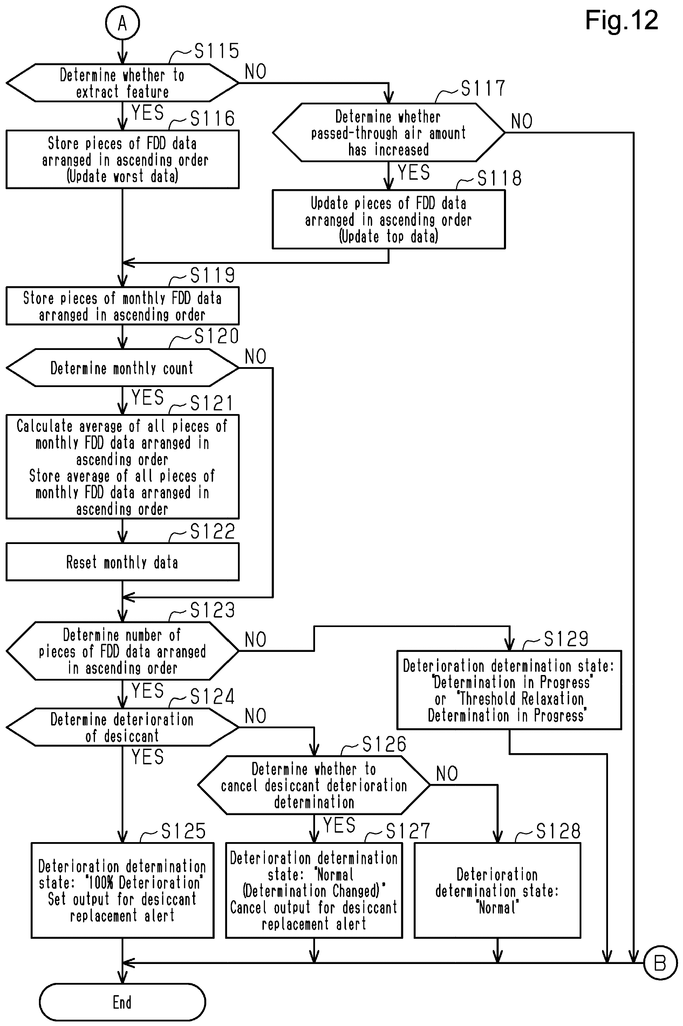

Next, the deterioration determination process of the desiccant in the supplying operation will be described with reference to Figs. 11 and 12. One cycle is defined as the period from the start of the loading operation by the compressor 4 to the end of the unloading operation.

As shown in Fig. 11, when starting the supplying operation, the ECU 80 determines whether the desiccant is the detection target of deterioration determination (step S101). The determining unit 80B performs the determination using the following criteria: "regeneration was performed in the previous cycle", "the passed-through air amount in the previous cycle < a rated passed-through air amount = the limit passed-through air amount $\times$ 0.8 (0.8 may be changed)", and "the moisture absorption capability of desiccant is satisfactory". When determining that the desiccant is not the detection target of the deterioration determination (step S101: NO), the ECU 80 ends the process and proceeds to the next operation.

When determining that the desiccant is the detection target of the deterioration determination (step S101: YES), the ECU 80 calculates dew point data for calculating a feature (step S102). Specifically, the ECU 80 calculates the dew point by substituting the temperature and the humidity into the Tetens equation, and stores, in the storage unit 80A, data of the combination of the calculated dew point and the time for each point used for calculating the FDD. This data includes is data of the feature and the passed-through air amount arranged in ascending order. When $x2 \leq x4$ is satisfied, the compressed dried air is sufficiently dehumidified by the dehumidification capacity of the desiccant, and the ECU 80 stores the points A to G in the storage unit 80A. When $x2 > x4$ is satisfied, the humidity exceeds the dehumidification capacity of the desiccant and thus the compressed dried air has not been sufficiently dehumidified, and the ECU 80 stores the points A to F in the storage unit 80A.

Next, the ECU 80 determines whether the use state of the desiccant is equivalent to one-month use (Step S103). Specifically, the determining unit 80B determines whether the use state of the desiccant is less than the equivalence of one-month use using the following criteria: "the total usage passed-through air amount < the rated passed-through air amount $\times$ the number of cycles equivalent to one-month use", "the total usage time < one-month use", and "the total usage driving distance < the driving distance equivalent to one-month use". The number of cycles equivalent to one-month use and the driving distance equivalent to one-month use can be any values that may be average values. Alternatively, the number of cycles equivalent to one-month use and the driving distance equivalent to one-month use may each have a value that is one twelfth of a value equivalent to one-year use. The total usage passed-through air amount, the total usage time, and the total usage driving distance are values measured from the start of use of the desiccant, and are reset when the desiccant is replaced.

When determining that the use state of the desiccant is equivalent to one-month use (step S103: YES), the ECU 80 sets the deterioration determination state to "Normal" (step S104). The ECU 80 causes the notification unit 81 to indicate "Normal".

When determining that the use state of the desiccant is not equivalent to one-month use (step S103: NO), the ECU 80 determines whether the use state of the desiccant is equivalent to six-month use (step S105). Specifically, the determining unit 80B determines whether the use state of the desiccant is greater than or equal to the equivalence of six-month use using the following criteria: "the total usage passed-through air amount ≥ the rated passed-through air amount × the number of cycles equivalent to six-month use", "the total usage time ≥ six months", and "the total usage driving distance ≥ the driving distance equivalent to the six-month use".

When determining that the use state of the desiccant is equivalent to six-month use (step S105: YES), the ECU 80 determines the number of pieces of FDD data arranged in ascending order (step S106). That is, the determining unit 80B determines whether the number of pieces of FDD data arranged in ascending order is less than a prescribed value. The prescribed value is, for example, five, and can be set to any value. As the prescribed value decreases, the period until deterioration is determined is shortened. The prescribed value is thus preferably adjusted in accordance with the manner in which the vehicle is used. When determining that the number of pieces of FDD data arranged in ascending order is less than the prescribed value (step S106: YES), the determining unit 80B sets a threshold changing flag for extracting an FDD feature to 1 (step S107). The determining unit 80B sets the deterioration determination state to "Threshold Relaxation Determination in Progress" (step S107). The ECU 80 causes the notification unit 81 to indicate "Threshold Relaxation Determination in Progress".

When determining that the number of pieces of FDD data arranged in ascending order is greater than or equal to the prescribed value (step S106: NO), the determining unit 80B sets the threshold changing flag for extracting an FDD feature to 0 (step S108). The determining unit 80B sets the deterioration determination state to "Determination in Progress" (step S108). The ECU 80 causes the notification unit 81 to indicate "Determination in Progress".

When determining that the use state of the desiccant is not equivalent to six-month use (step S105: NO), the determining unit 80B sets the threshold changing flag for extracting an FDD feature to 0 (step S108). The determining unit 80B sets the deterioration determination state to "Determination in Progress" (step S108). The determining unit 80B causes the notification unit 81 to indicate "Determination in Progress".

Subsequently, the ECU 80 determines whether to change an FDD threshold (step S109). Specifically, the determining unit 80B determines whether to change the threshold for the FDD data based on the threshold changing flag for extracting the FDD feature. When the threshold changing flag for extracting the FDD feature is 0, the determining unit 80B determines not to change the FDD threshold (step S109: NO). In this case, the determining unit 80B does not change the DPR threshold and sets an upper limit and a lower limit of the DPR threshold (step S111). Specifically, the determining unit 80B sets the upper limit of the DPR threshold to AAA (for example, 1.5), and sets the lower limit of the DPR threshold to BBB (for example, 0.9). The ECU 80 does not change the deterioration determination state.

When the threshold changing flag for extracting the FDD feature is 1, the determining unit 80B makes a determination to change the FDD threshold (step S109: YES). In this case, the determining unit 80B changes the DPR threshold in the direction of relaxing the constraint condition for extraction of the FDD feature (step S110). Specifically, the determining unit 80B sets the upper limit of the DPR threshold to XXX (for example, 2.5) (XXX > AAA), and sets the lower limit of the DPR threshold to YYY (for example, 0.8) (YYY < BBB). This facilitates extraction of pieces of FDD data arranged in ascending order. If pieces of FDD data arranged in ascending order have already been extracted, the ECU 80 retains these without resetting them. The determining unit 80B sets the deterioration determination state to "Re-Determination in Progress" (step S110). The determining unit 80B causes the notification unit 81 to indicate "Determination in Progress".

Subsequently, the ECU 80 determines whether a feature needs to be calculated (step S112). The determining unit 80B performs the determination using the following criteria: "total usage passed-through air amount < the rated passed-through air amount × the number of cycles equivalent to one-year use", "the usage time < one year", and "usage driving distance < the driving distance equivalent to one-year use". When determining that the features need to be calculated (step S112: YES), the determining unit 80B calculates the features (FDD, DPR) (step S113). Specifically, the determining unit 80B calculates the features (FD D, DPR) from the pieces of dew point data calculated in step S102.

When determining that the feature does not need to be calculated (step S112: NO), the determining unit 80B determines the number of pieces of FDD data (step S114). In other words, the determining unit 80B determines whether the number of pieces of FDD data is less than a deterioration determination enabling threshold. The deterioration determination enabling threshold is, for example, 7, and can be set to any value. When determining that the number of pieces of the FDD data is less than the deterioration determination enabling threshold (step S114: YES), the ECU 80 sets the deterioration determination state to "Indeterminable" (step S130). Additionally, the ECU 80 sets the output for a desiccant replacement alert (Step S130). The ECU 80 causes the notification unit 81 to indicate "Indeterminable" and "Desiccant Replacement Alert". The ECU 80 then ends the deterioration determination process.

When determining that the number of pieces of FDD data is not less than the deterioration determination enabling threshold (step S114: NO), the ECU 80 sets the deterioration determination state to "Replacement Overdue" (step S131). Additionally, the ECU 80 sets the output for a desiccant replacement alert (step S131). The ECU 80 causes the notification unit 81 to indicate "Replacement Overdue" and "Desiccant Replacement Alert". The ECU 80 then ends the deterioration determination process.

Subsequently, the ECU 80 determines whether to extract a feature as shown in Fig. 12 (step S115). In other words, the determining unit 80B determines whether the DPR is between the DPR threshold lower limit and the DPR threshold upper limit. When determining that the DPR is between the DPR threshold lower limit and the DPR threshold upper limit (step S115: YES), the determining unit 80B stores pieces of FDD data arranged in ascending order (step S116). Specifically, the determining unit 80B stores, in the storage unit 80A, a prescribed number (for example, n) of pieces of extracted FDD data arranged in ascending order from the minimum value and the passed-through air amount that is obtained when the FDD is extracted.

When determining that the DPR is not between the DPR threshold lower limit and the DPR threshold upper limit (step S115: NO), the ECU 80 determines whether the passed-through air amount has increased (step S117). The determining unit 80B performs the determination using the following criteria: "the passed-through air amount < the passed-through air amount of FDD top" and "DPR > DPR threshold (for determining whether passed-through air amount has increased)". When determining that the passed-through air amount has not increased (step S117: NO), the determining unit 80B ends the process.

When determining that the passed-through air amount has increased (step S117: YES), the determining unit 80B updates the pieces of FDD data arranged in ascending order (step S118). Specifically, the determining unit 80B deletes the first one of the pieces of FDD data arranged in ascending order (i.e., the minimum value), shifts the second to nth pieces of data up by one position each, and saves the shifted pieces of data as the new first to (n - 1)th pieces of FDD data in ascending order. The determining unit 80B stores the extracted FDD as the nth one of the pieces of FDD data arranged in ascending order.

Next, the ECU 80 stores pieces of monthly FDD data arranged in ascending order (step S119). Specifically, the determining unit 80B stores, as monthly data, pieces of FDD data arranged in ascending order that include the first (i.e. minimum value) to nth values of the FDD extracted within a one-month interval and the passed-through air amounts at the time of extraction.

Subsequently, the ECU 80 determine whether the use state meets conditions for monthly count (step S120). The determining unit 80B performs the determination using the following criteria: "the monthly usage passed-through air amount $\geq$ the rated passed-through air amount $\times$ number of cycles equivalent to one-month use", or "the monthly usage time $\geq$ one month", or "monthly usage driving distance $\geq$ the driving distance equivalent to one-month use". When determining that the use state does not meet the conditions for of the monthly count (step S120: NO), the ECU 80 proceeds to step S123.

When determining that the use state meets the conditions for the monthly count (step S120: YES), the ECU 80 calculates the average of the pieces of monthly FDD data arranged in ascending order, and stores the calculated average of the pieces of monthly FDD data arranged in ascending order (step S121). The feature tends to change in a stepwise manner from the cycle in which the regeneration operation is performed to the cycle in which the regeneration operation is ultimately not performed. Therefore, the ECU 80 stores the average in order to taking into consideration this tendency in determining the deterioration of the desiccant.

Subsequently, the ECU 80 resets the monthly data (step S122). Specifically, since the use state meets the conditions for the monthly count, the ECU 80 finalizes the data of the month as the previous monthly data to be stored, and stores pieces of data arranged in ascending order as the stored data for the current month.

Subsequently, the ECU 80 determines the number of the stored pieces of FDD data arranged in ascending order (step S123). Specifically, the determining unit 80B determines whether the number of pieces of FDD data arranged in ascending order greater than or equal to the deterioration determination enabling threshold. The deterioration determinable enabling threshold is the minimum number required for the deterioration determination of the desiccant, for example, seven, and can be set to any value. When determining that the number of pieces of FDD data arranged in ascending order is less than the deterioration determination enabling threshold (step S123: NO), the ECU 80 sets the deterioration determination state to "Determination in Progress" or "Threshold Relaxation Determination in Progress" (step S129). That is, since the number of pieces of FDD data arranged in ascending order is too small to execute deterioration determination, the determining unit 80B determines that the determination is in progress without outputting a result. The determining unit 80B causes the notification unit 81 to indicate "Determination in Progress" or "Threshold Relaxation Determination in Progress". The ECU 80 then ends the deterioration determination process.

When determining that the number of pieces of FDD data arranged in ascending order is greater than or equal to the deterioration determination enabling threshold (step S123: YES), the ECU 80 determines deterioration of the desiccant (step S124). Specifically, the determining unit 80B determines that the desiccant has deteriorated when the following criterion is met when the deterioration determination rate of the pieces of FDD data arranged in ascending order is greater than or equal to a certain value (e.g., 7/10): "FDD $\leq$ the desiccant deterioration determination threshold". When determining that the desiccant has not deteriorated (step S124: NO), the determining unit 80B determines whether to cancel the deterioration determination of the desiccant (step S126). Specifically, if the ECU 80 determined that the desiccant had deteriorated prior to the current cycle, the deterioration determination of the desiccant needs to be canceled. In that case, the ECU 80 determines whether the deterioration determination of the desiccant needs to be canceled.

When determining the deterioration determination of the desiccant does not need to be canceled (step S126: NO), the ECU 80 sets the deterioration determination state to "Normal" (step S128). Specifically, since the desiccant has not been determined to have deteriorated, the ECU 80 determines that the state is "Normal" in accordance with the determination result in step S124. The ECU 80 causes the notification unit 81 to indicate "Normal". The ECU 80 then ends the deterioration determination process.

When determining that the deterioration determination of the desiccant needs to be canceled (step S126: YES), the ECU 80 sets the deterioration determination state to "Normal (Determination Changed)" (step S127). Specifically, since the desiccant has been previously determined to have deteriorated, the ECU 80 sets the state to "Normal (Determination Changed)" in accordance with the determination result in step S124, in order to indicate that the deterioration determination has been changed. Additionally, the ECU 80 cancels the output of the alert for desiccant replacement (Step S127). The ECU 80 causes the notification unit 81 to stop the notification indicating the "Desiccant Replacement Alert" and to perform notification indicating "Normal (Determination Changed)". The ECU 80 then ends the deterioration determination process.

When determining that the desiccant has deteriorated (step S124: YES), the ECU 80 sets the deterioration determination state to "100% Deterioration" (step S125). Additionally, the ECU 80 sets the output for a desiccant replacement alert (step S125). The ECU 80 causes the notification unit 81 to indicate "100% Deterioration" and "Desiccant Replacement Alert". The ECU 80 then ends the deterioration determination process.

The present embodiment has the following advantages.

(1) The inventor has found that there is a correlation between desiccant deterioration and temporal changes in the dew point of compressed dried air during the supplying operation executed after the regeneration operation. The deterioration of the desiccant is determined by using temporal changes in the dew point of the compressed dried air in the supplying operation. The humidity change characteristic of the compressed dried air is directly affected by its temperature change. Therefore, the state of the compressed air can be comprehensively obtained through this single characteristic. This allows for determination of deterioration of the desiccant and improves the accuracy of desiccant deterioration determination.

(2) Since the determination is made based on the calculated feature, deterioration of the desiccant is readily determined.

(3) Since the average of multiple accumulated features is used, it is possible to determine the deterioration of the desiccant with a higher accuracy than in a case in which deterioration is determined using a feature in a single regeneration operation.

(4) When the difference between the accumulated feature and the obtained feature is relatively large, data including the maximum value of the accumulated feature and the passed-through air amount is deleted. This allows for determination in accordance with the current state of the desiccant.

(5) When the passed-through air amount changes greatly in the supplying operation, the deterioration state of the desiccant may be improved. Thus, data including the minimum value of the accumulated feature is deleted. This extends the replacement period of the desiccant.

(6) Since the deterioration state of the desiccant may be improved by the regeneration operation, it is possible to recognize that the deterioration state of the desiccant is improved by continuing the deterioration determination of the desiccant even after it is determined that the desiccant has deteriorated. By stopping the notification regarding deterioration of the desiccant, the replacement period of the desiccant is extended.

Other Embodiments

The above-described embodiment may be modified as follows. The above-described embodiment and the following modifications can be combined as long as the combined modifications remain technically consistent with each other.

In the above-described embodiment, the purge (second operation) mode M2, the regeneration (third operation) mode M3, the oil-cut (fourth operation) mode M4, the compressor assist (sixth operation) mode M6, the regenerative supply (seventh operation) mode M7, and the forced regeneration (eighth operation) mode M8 are each performed for the specified time. However, the specified time for each mode may be set arbitrarily.

In step S13 of the above-described embodiment, the condition for transitioning to the oil-cut (fourth operation) mode M4 is met when the number of times of performance of the oil-cut operation is less than a specified number of times and the rate of operation of the compressor 4 is relatively low. Instead, when at least one of the conditions is met, the ECU 80 may transition to the oil-cut (fourth operation) mode M4. In other words, in step S13, the ECU 80 determines whether at least one of the following conditions for transitioning to the oil-cut (fourth operation) mode M4 is met: a certain period of time has elapsed, the number of times the oil-cut operation has been executed is less than a prescribed number of times, and the rate of operation of the compressor 4 is relatively low.

In step S32 of the above-described embodiment, it is determined whether all the following conditions for transitioning to the regenerative supply (seventh operation) mode M7 are met: the vehicle is in motion, no fuel is being consumed, and the pressure in the supply circuit 12 is lower than a threshold. Instead, when at least one of the conditions is met, the ECU 80 may transition to the regenerative supply (seventh operation) mode M7. In other words, in step S32, the ECU 80 determines whether at least one of the following conditions for transitioning to the regenerative supply (seventh operation) mode M7 is met: the vehicle is in motion, no fuel is being consumed, and the pressure in the supply circuit 12 is lower than a threshold.

In step S43 of the above-described embodiment, it is determined whether both of the following conditions for transitioning to the forced regeneration (eighth operation) mode M8 are met: the pressure in the supply circuit 12 is higher than the threshold, and the amount of water in the air tank 30 is relatively large. Instead, the ECU 80 may transition to the forced regeneration (eighth operation) mode M8 when at least the amount of water in the air tank 30 is relatively large. In other words, in step S43, the ECU 80 determines whether the amount of water in the air tank 30 is relatively large as the condition for the transition to the forced regeneration (eighth operation) mode M8.

In the above-described embodiment, the filter 17 includes the oil trapping portion, but the oil trapping portion may be omitted from the filter 17.

In the above-described embodiment, the air drying circuit does not have the above-described configuration. The air drying circuit may have any configuration as long as the air drying circuit is configured to perform the supply (first operation) mode M1, the regenerative supply (seventh operation) mode M7, the regeneration (third operation) mode M3, and the forced regeneration (eighth operation) mode M8. Accordingly, the air drying circuit does not necessarily need to perform the purge (second operation) mode M2, the oil-cut (fourth operation) mode M4, the purgeless supply stop (fifth operation) mode M5, and the compressor assist (sixth operation) mode M6.

In the above-described embodiment, it is determined whether to cancel the desiccant deterioration determination in step S126. However, once the desiccant is determined to have deteriorated, the deterioration determination may be continued. In this case, steps S126 to S128 are omitted.

In the above-described embodiment, whether the passed-through air amount has increased is determined in step S117, and the pieces of FDD data arranged in ascending order are updated in step S118. However, it is not necessary to determine whether the passed-through air amount has increased. In this case, steps S117 and S118 are omitted.

In the above-described embodiment, the area on the graph of the temporal changes in the dew point is calculated as the feature from the temporal changes in the dew point of the compressed dried air. However, when calculating the feature from the temporal changes in the dew point, the graph does not have to be used. Further, the feature may be calculated by integration of the change characteristics, which is the advanced area calculation of the dew point.

In the above-described embodiment, the feature is calculated based on the temporal changes in the dew point of the compressed dried air. However, the deterioration of the desiccant may be determined by using feature points obtained from temporal changes in the dew point. For example, deterioration of the desiccant may be determined based on the relationship between the point in time at which the supplying operation is started, the point in time at which the supplying operation is ended, and the minimum point. Alternatively, deterioration of the desiccant may be determined based on the difference between the maximum dew point and the minimum dew point of the supplying operation.

In the above-described embodiment, the air supply system 10 is described as a system employed in a vehicle such as a truck, a bus, or a construction machine. Alternatively, the air supply system may be mounted on other vehicles such as passenger cars, railway vehicles, or the like.

In the above-described embodiments, multiple objects can be integrated into a single object, or conversely, a single object can be divided into multiple objects. Regardless of whether the objects are integrated or divided, the configuration should be such that the objective of the invention can be achieved.

In the above-described embodiments, multiple functions that are distributed can be aggregated in part or in whole, or conversely, multiple functions that are aggregated can be distributed in part or in whole. Regardless of whether the functions are aggregated or distributed, the configuration should be such that the objective of the invention can be achieved.

REFERENCE SIGNS LIST

4) Compressor
10) Air Supply System
11) Air Drying Circuit
12) Supply Circuit
15) Upstream Check Valve

16) Branch Passage
17) Filter
18) Air Supply Passage
19) Downstream Check Valve
20) Bypass Passage
21) Regeneration Control Valve
22) Orifice
25) Drain Valve
26A) Governor
26B) Unloading Control Valve
27) Drain Port as Discharge Port
30) Air Tank
50) Pressure Sensor
51) Humidity Sensor
52) Temperature Sensor
53) Pressure Sensor
80) ECU
80A) Storage Unit
80B) Determining Unit
81) Notification Unit
E61 to E67) Wires

## Claims

1. An air supply system, comprising:

   an air drying circuit arranged between a compressor configured to deliver compressed air and an air tank configured to store compressed dried air, the air drying circuit including a filter including a desiccant that traps water; and
   a controller configured to control the air drying circuit, wherein
   the controller is configured to execute

   a supplying operation of causing the compressed air delivered by the compressor to pass through the filter in a first direction to produce compressed dried air, and supplying this compressed dried air to the air tank to store the compressed dried air in the tank;
   a regeneration operation of causing the compressed dried air stored in the air tank to pass through the filter in a second direction that is opposite to the first direction, thereby draining the trapped water through a discharge port; and
   a determining operation of determining whether the desiccant has deteriorated using temporal changes in a dew point of the compressed dried air in the supplying operation executed after the regeneration operation.

2. The air supply system according to claim 1, wherein the controller is configured to calculate a feature based on the temporal changes in the dew point of the compressed dried air, and determine whether the desiccant has deteriorated based on the calculated feature.

3. The air supply system according to claim 2, wherein the controller is configured to

   accumulate an average value of the features and an average value of passed-through air amounts in all cycles from a cycle in which the regeneration operation was executed to a cycle in which the regeneration operation was not executed, and
   use the average value of the accumulated features to determine whether the desiccant has deteriorated based on a ratio at which the data of the accumulated features exceeds a threshold.

4. The air supply system according to claim 3, wherein the controller is configured to delete data including a maximum value of the accumulated features and a passed-through air amount that corresponds to the maximum value when an obtained feature is less than any of the accumulated features.

5. The air supply system according to claim 3 or 4, wherein the controller is configured to delete data including a minimum value of the accumulated features and a passed-through air amount that corresponds to the minimum value when an obtained passed-through air amount is less than the average of the accumulated passed-through air amounts and there is an allowable margin relative to a limit of a dehumidification capacity of the desiccant.

6. The air supply system according to any one of claims 2 to 5, further comprising a notification unit that issues a notification that the desiccant has deteriorated, wherein the controller is configured to, after determining that the desiccant has deteriorated based on the features, continuously determine whether the desiccant has deteriorated, and, after determining that the desiccant has deteriorated, stop the notification issued by the notification unit when determining that the desiccant has not deteriorated.

7. A method of controlling an air supply system, the air supply system including an air drying circuit and a controller, the air drying circuit being arranged between a compressor configured to deliver compressed air and an air tank configured to store compressed dried air, the air drying circuit including a filter including a desiccant that traps water, and the controller being configured to control the air drying circuit, the method comprising:

a supplying step that executes a supplying operation of causing the compressed air delivered by the compressor to pass through the filter in a first direction to produce compressed dried air, and supplying this compressed dried air to the air tank to store the compressed dried air in the tank;
a regeneration step that executes a regeneration operation of causing the compressed dried air stored in the air tank to pass through the filter in a second direction that is opposite to the first direction, thereby draining the trapped water through a discharge port; and
a determining step that determines whether the desiccant has deteriorated using temporal changes in a dew point of the compressed dried air in the supplying operation executed after the regeneration operation.

8. A control program for an air supply system, the air supply system including an air drying circuit and a controller, the air drying circuit being arranged between a compressor configured to deliver compressed air and an air tank configured to store compressed dried air, the air drying circuit including a filter including a desiccant that traps water, and the controller being configured to control the air drying circuit, wherein the control program causes the controller to execute:

a supplying step that executes a supplying operation of causing the compressed air delivered by the compressor to pass through the filter in a first direction to produce compressed dried air, and supplying this compressed dried air to the air tank to store the compressed dried air in the tank;
a regeneration step that executes a regeneration operation of causing the compressed dried air stored in the air tank to pass through the filter in a second direction that is opposite to the first direction, thereby draining the trapped water through a discharge port; and
a determining step that determines whether the desiccant has deteriorated using temporal changes in a dew point of the compressed dried air in the supplying operation executed after the regeneration operation.

Fig.1

EP 4 458 629 A1

## Fig.2A

| Compressor 4: | ON |
|---|---|
| Regeneration Control Valve 21: | CLOSE |
| Governor 26A: | CLOSE |
| Unloading Control Valve 26B: | CLOSE |

## Fig.2B

| Compressor 4: | OFF |
|---|---|
| Regeneration Control Valve 21: | CLOSE |
| Governor 26A: | OPEN |
| Unloading Control Valve 26B: | OPEN |

## Fig.2C

| Compressor 4: | OFF |
|---|---|
| Regeneration Control Valve 21: | OPEN |
| Governor 26A: | OPEN |
| Unloading Control Valve 26B: | OPEN |

## Fig.2D

| Compressor 4: | ON |
|---|---|
| Regeneration Control Valve 21: | CLOSE |
| Governor 26A: | OPEN→CLOSE |
| Unloading Control Valve 26B: | CLOSE |

## Fig.2E

| Compressor 4: | OFF |
|---|---|
| Regeneration Control Valve 21: | CLOSE |
| Governor 26A: | CLOSE |
| Unloading Control Valve 26B: | OPEN |

## Fig.2F

| Compressor 4: | OFF |
|---|---|
| Regeneration Control Valve 21: | OPEN |
| Governor 26A: | CLOSE |
| Unloading Control Valve 26B: | OPEN |

Fig.3

EP 4 458 629 A1

Fig.4

```
┌──────────────────────────────┐
│ Supply (first operation)     │──M1
└──────────────────────────────┘
             │
             ▼        S11
          ╱────────╲           NO
         ╱ Higher than ╲──────────────────────────────────┐
         ╲ cut-out pressure? ╱                             │
          ╲────────╱                                        │
             │ YES                                          ▼        S13
             ▼        S12                              ╱────────╲          NO
          ╱────────╲        NO                        ╱ Oil-cut ╲──────────┐
         ╱ Water amount ╲──────────┐                  ╲ condition met? ╱   │
         ╲ in tank large? ╱        │                   ╲────────╱          │
          ╲────────╱               │                      │ YES           │
             │ YES                 │                       ▼       M4      │
             ▼        M3           ▼       M2        ┌──────────────────┐ │
    ┌──────────────────┐  ┌──────────────────┐       │ Oil-cut (fourth  │ │
    │ Regeneration     │  │ Purge            │       │ operation)       │ │
    │ (third operation)│  │ (second operation)│      └──────────────────┘ │
    └──────────────────┘  └──────────────────┘            │               │
                                                           ▼      S14      │
                                                       ╱────────╲    NO    │
                                                      ╱ Specified period ╲─┘
                                                      ╲ of time elapsed? ╱
                                                       ╲────────╱
                                                          │ YES
                                                          ▼       M1
                                                 ┌──────────────────┐
                                                 │ Supply (first    │
                                                 │ operation)       │
                                                 └──────────────────┘
```

Fig.5

```
┌────────────────────────────────────┐
│ Purge (second operation)           │──M2, M3
│ Regeneration (third operation)     │
└────────────────────────────────────┘
             │
             ▼        S21
          ╱────────╲           NO
         ╱ Specified period ╲──────────────────────────────┐
         ╲ of time elapsed? ╱                               │
          ╲────────╱                                         ▼        S24
             │ YES                                       ╱────────╲          NO
             ▼        S22                               ╱ Lower than ╲─────────┐
          ╱────────╲        NO                          ╲ cut-in pressure? ╱   │
         ╱ Assist ON? ╲──────────┐                       ╲────────╱            │
          ╲────────╱             │                          │ YES             │
             │ YES               │                           ▼       M1        │
             ▼        M6         │                  ┌──────────────────┐      │
    ┌──────────────────┐         │                  │ Supply (first    │      │
    │ Compressor assist│         │                  │ operation)       │      │
    │ (sixth operation)│         │                  └──────────────────┘      │
    └──────────────────┘         │                                           │
             │                   │                                           │
             ▼        S23        │                                           │
          ╱────────╲        NO   │                                           │
         ╱ Specified period ╲────┤                                           │
         ╲ of time elapsed? ╱    │                                           │
          ╲────────╱             │                                           │
             │ YES               │                                           │
             ▼                   │                                           │
    ┌──────────────────┐         │                                           │
    │ Purgeless supply stop │──M5                                            │
    │ (fifth operation)│                                                     │
    └──────────────────┘                                                     │
```

Fig.6

Purgless supply stop
(fifth operation) ~M5

~S31

Lower than
cut-in pressure? ——NO——→

YES

Supply (first operation) ~M1

~S32

Regenerative supply
condition met? ——NO——→

YES

Regenerative supply
(seventh operation) ~M7

Fig.7

Regenerative supply
(seventh operation) ~M7

~S41

Purgeless supply
stop condition met? ——YES——→

NO

Purgeless supply stop
(fifth operation) ~M5

~S42

Lower than
cut-in pressure? ——NO——→

YES

~S43

Forced regeneration
condition met? ——NO——→

Supply (first operation) ~M1

YES

Forced regeneration
(eighth operation) ~M8

Fig.8

```
┌─────────────────────────┐
│   Forced regeneration   │──M8
│    (eighth operation)   │
└─────────────────────────┘
              │
              ▼
          ╱───S51──╲
       ╱               ╲      NO
      ╱  Specified period ╲───────────────────────────┐
      ╲  of time elapsed? ╱                            │
       ╲               ╱                               │
          ╲─────────╱                               ╱───S55──╲
              │ YES                              ╱             ╲   NO
              ▼                                 ╱  Lower than    ╲───┐
          ╱───S52──╲                            ╲  cut-in pressure?╱  │
       ╱               ╲   YES                    ╲             ╱     │
      ╱  Rate of operation ╲──────────────┐          ╲───────╱       │
      ╲  of compressor high?╱             │              │ YES       │
       ╲               ╱                  │              │           │
          ╲─────────╱                     │              ▼           │
              │ NO                         │   ┌────────────────────┐ │
              ▼                            └──▶│ Supply (first operation)│──M1
          ╱───S53──╲                          └────────────────────┘ │
       ╱               ╲   NO                                         │
      ╱   Assist ON?     ╲───────┐                                   │
      ╲                 ╱        │                                   │
       ╲               ╱         │                                   │
          ╲─────────╱            │                                   │
              │ YES              │                                   │
              ▼                  │                                   │
┌─────────────────────────┐      │                                   │
│   Compressor assist     │──M6  │                                   │
│    (sixth operation)    │      │                                   │
└─────────────────────────┘      │                                   │
              │                  │                                   │
              ▼                  │                                   │
          ╱───S54──╲             │                                   │
       ╱               ╲   NO    │                                   │
      ╱  Specified period ╲──────┘                                   │
      ╲  of time elapsed? ╱                                          │
       ╲               ╱                                             │
          ╲─────────╱                                               │
              │ YES                                                  │
              ▼                                                      │
┌─────────────────────────┐                                         │
│  Purgeless supply stop  │──M5                                      │
│    (fifth operation)    │                                         │
└─────────────────────────┘                                         
```

Fig.9

Fig.10

Fig.11

```
                    ┌─────────────┐
                    │    Start    │
                    └──────┬──────┘
                           │            ~S101
        ┌──────────────────▼──────────────────┐  NO
        │  Determine detection target of      ├──────────────────────────┐
        │  deterioration determination        │                          │
        └──────────────────┬──────────────────┘                          │
                       YES │  ~S102                                       │
        ┌──────────────────▼──────────────────┐                          │
        │  Calculate dew point data           │                          │
        │  for calculating feature            │                          │
        └──────────────────┬──────────────────┘                          │
                           │             ~S103                            │
        ┌──────────────────▼──────────────────┐  NO                      │
        │  Determine use state equivalent     ├──────────┐               │
        │  to one-month use                   │          │  ~S105        │
        └──────────────────┬──────────────────┘   ┌──────▼──────────────┐│
                       YES │                       │ Determine use state │  NO
                           │                       │ equivalent to six-  ├────┐
                           │                       │ month use           │    │
                           │                       └──────┬──────────────┘    │
                           │                          YES │  ~S106            │
                           │                       ┌──────▼──────────────┐    │
                           │                       │ Determine number of │ NO │
                           │                       │ pieces of FDD data  ├──┐ │
                           │                       │ arranged in         │  │ │
                           │                       │ ascending order     │  │ │
                           │                       └──────┬──────────────┘  │ │
                  ~S104    │                          YES │  ~S107    ~S108 │ │
```

**S104**
Deterioration determination state: "Normal"

**S107**
Threshold changing flag for extracting FDD feature = 1
Deterioration determination state: "Threshold Relaxation Determination in Progress"

**S108**
Threshold changing flag for extracting FDD feature = 0
Deterioration determination state: "Determination in Progress"

**S109**
Determine whether to change FDD threshold — NO

**S110**
Set threshold for extracting FDD feature
DPR threshold lower limit = XXX
DPR threshold upper limit = YYY
Deterioration determination state: "Re-determination in Progress"

**S111**
Set threshold for extracting FDD feature
DPR threshold lower limit = AAA
DPR threshold upper limit = BBB
*Deterioration determination state not changed

**S112**
Determine whether to calculate feature — NO

**S113**
Calculate feature (FDD, DPR)

**S114**
Determine number of pieces of FDD data in ascending order — NO

**S130**
Deterioration determination state: "Indeterminable"
Set output for desiccant replacement alert

**S131**
Deterioration determination state: "Replacement Overdue"
Set output for desiccant replacement alert

(A)

(B)

Fig.12

## INTERNATIONAL SEARCH REPORT

| International application No. |
|---|
| **PCT/JP2022/047940** |

**A. CLASSIFICATION OF SUBJECT MATTER**

*B60T 17/00*(2006.01)i; *B60T 17/18*(2006.01)i; *B01D 53/26*(2006.01)i; *F04B 39/16*(2006.01)i
FI: B60T17/00 B; B60T17/18; B01D53/26 230; F04B39/16 F

According to International Patent Classification (IPC) or to both national classification and IPC

**B. FIELDS SEARCHED**

Minimum documentation searched (classification system followed by classification symbols)

B60T17/00; B60T17/18; B01D53/26; F04B39/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-166019 A (NABTESCO AUTOMOTIVE CORP) 15 September 2016 (2016-09-15) paragraphs [0010]-[0013], [0015]-[0016], [0027], fig. 1, 5 | 1, 7-8 |
| A | paragraphs [0010]-[0013], [0015]-[0016], [0027], fig. 1, 5 | 2-6 |
| Y | JP 9-047630 A (TOSHIBA CORP) 18 February 1997 (1997-02-18) paragraphs [0062]-[0070] | 1, 7-8 |
| Y | JP 2007-319727 A (TAKASAGO THERMAL ENG CO LTD) 13 December 2007 (2007-12-13) paragraph [0003] | 1, 7-8 |
| Y | JP 2004-188371 A (FUJI HEAVY IND LTD) 08 July 2004 (2004-07-08) paragraph [0008] | 1, 7-8 |
| A | JP 2010-229897 A (NABTESCO AUTOMOTIVE CORP) 14 October 2010 (2010-10-14) paragraphs [0028]-[0029] | 1-8 |
| A | JP 2014-104457 A (MITSUBISHI HEAVY IND LTD) 09 June 2014 (2014-06-09) paragraph [0004] | 1-8 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/047940** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2013/0015864 A1 (ENDRESS + HAUSER GMBH + CO. KG) 17 January 2013 (2013-01-17)<br>    paragraph [0020] | 1-8 |
| A | JP 2010-221110 A (NABTESCO AUTOMOTIVE CORP) 07 October 2010 (2010-10-07)<br>    paragraphs [0029]-[0030] | 1-8 |

Form PCT/ISA/210 (second sheet) (January 2015)

INTERNATIONAL SEARCH REPORT
Information on patent family members

International application No.

**PCT/JP2022/047940**

| Patent document cited in search report | | | Publication date (day/month/year) | Patent family member(s) | | | Publication date (day/month/year) |
|---|---|---|---|---|---|---|---|
| JP | 2016-166019 | A | 15 September 2016 | (Family: none) | | | |
| JP | 9-047630 | A | 18 February 1997 | (Family: none) | | | |
| JP | 2007-319727 | A | 13 December 2007 | (Family: none) | | | |
| JP | 2004-188371 | A | 08 July 2004 | (Family: none) | | | |
| JP | 2010-229897 | A | 14 October 2010 | US<br>paragraphs [0164]-[0165]<br>WO<br>EP<br>CN | 2012/0153711<br><br>2010/095754<br>2399793<br>102421647 | A1<br><br>A1<br>A1<br>A | |
| JP | 2014-104457 | A | 09 June 2014 | (Family: none) | | | |
| US | 2013/0015864 | A1 | 17 January 2013 | WO<br>DE<br>CN | 2011/124418<br>102010003710<br>102834715 | A1<br>A1<br>A | |
| JP | 2010-221110 | A | 07 October 2010 | US<br>paragraphs [0217]-[0218]<br>WO<br>EP<br>CN | 2015/0217744<br><br>2010/095754<br>2399793<br>102421647 | A1<br><br>A1<br>A1<br>A | |

Form PCT/ISA/210 (patent family annex) (January 2015)

**EP 4 458 629 A1**

## REFERENCES CITED IN THE DESCRIPTION

**Patent documents cited in the description**

- JP 2010201323 A